# EUROPEAN PATENT APPLICATION

(11) **EP 4 149 148 A1**
(43) Date of publication of application: **15.03.2023**
(21) Application number: 21910007.0
(22) Date of filing: 09.11.2021
(51) Int. Cl.: H04W 16/32, H04W 72/04, H04W 48/08, H04W 74/08

(54) **USER EQUIPMENT, WIRELESS ACCESS NETWORK NODE, AND METHODS THEREFOR**

(30) Priority: 23.12.2020 JP 2020213547
(71) Applicant: NEC Corporation, 108-8001 Tokyo (JP)
(72) Inventor: FUTAKI Hisashi, Tokyo 108-8001 (JP); HAYASHI Sadafuku, Tokyo 108-8001 (JP)
(74) Representative: MacDougall, Alan John Shaw
(86) International application number: PCT/JP2021/041138
(87) International publication number: WO 2022/137853

(57) **Abstract**

When a Secondary Cell Group (SCG) containing a Primary SCG Cell (PSCell) is deactivated upon a PSCell addition or a PSCell mobility, a User Equipment (3) performs random access to the PSCell in response to the PSCell addition or the PSCell mobility without waiting until a future SCG activation. This can contribute, for example, to proper random access when the SCG is deactivated.

## Description

### Technical Field

The present disclosure relates to radio communication systems, and in particular to deactivation of a Secondary Cell Group (SCG) in multi-connectivity (e.g., Dual Connectivity).

### Background Art

The 3rd Generation Partnership Project (3GPP) has started to work on Release 17. 3GPP discusses efficient activation and deactivation mechanism for Secondary Cell Group (SCG) (see, for example, Non-Patent Literature 1-5). SCG deactivation enables deactivation of one SCG, including the Primary SCG Cell (PSCell).

The 3GPP discussions have examined whether an SCG Radio Resource Control (RRC) reconfiguration can select the SCG activation state (activated or deactivated) at PSCell addition, PSCell modification, RRC resume, or handover. In these discussions, it has been agreed that PSCell Mobility is supported while the SCG is deactivated. Although the definition of PSCell mobility is not clear at this time, it can be presumed that PSCell mobility includes at least intra-Secondary Node (SN) PSCell Change and inter-SN PSCell Change.

How and when a UE establishes and maintains uplink synchronization with a PSCell during SCG de-activation and (re)activation is also discussed. More specifically, it is discussed whether the UE needs to perform random access (also known as Random Access Channel (RACH)) to the PSCell while the SCG is deactivated. In one example, there is a proposal that the UE should trigger random access to the PSCell (RACH) while the PSCell is being activated from a deactivated state (see, for example, Proposal 3 in Non-Patent Literature 2). In contrast, it is also proposed that if an SCG is (re-)activated while the Time Alignment Timer (TAT) associated with the SCG is still running, the UE may initiate normal SCG operation without Random Access (RACH). (see, for example, Proposal 9 in Non-Patent Literature 3). This proposal assumes that the UE keeps the TAT running when the SCG is deactivated while the TAT associated with the SCG is running. It has also been proposed that the UE does not perform random access (RACH) when the PSCell is changed and the SCG is deactivated (see, for example, Proposal 17 in Non-Patent Literature 3).

Moreover, it is proposed that, in the basic concept of deactivated SCG, the UE keeps the SCG configuration in order to avoid delay due to configuration when the SCG needs to be activated (see, for example, Proposal 1 in Non-Patent Literature 2 and Proposal 18 in Non-Patent Literature 4). Similarly, it is proposed that when an SCG is activated, the network need not release the SCG configuration (see, for example, Proposal 18 in Non-Patent Literature 4).

### Citation List

### Non Patent Literature

[Non Patent Literature 1] Ericsson, "Efficient SCG (de)activation", R2-2010062, 3GPP TSG-RAN WG2 #112-e, November 2-13, 2020
[Non Patent Literature 2] MediaTek Inc. "Discussion on SCG suspension", R2-2009439, 3GPP TSG-RAN WG2 #112-e, November 2-13, 2020
[Non Patent Literature 3] Huawei, "Discussion on SCG deactivation and activation", R2-2010124, 3GPP TSG-RAN WG2 #112-e, November 2-13, 2020
[Non Patent Literature 4] Nokia, Nokia Shanghai Bell, "On fast deactivation/activation of SCG", R2-2009547, 3GPP TSG-RAN WG2 #112-e, November 2-13, 2020
[Non Patent Literature 5] ZTE, "Summary of Offline Discussion on SCG (de)activation", R3-207003, 3GPP TSG-RAN WG3 #110-e, November 2-12, 2020

### Summary of Invention

### Technical Problem

The inventors have studied SCG deactivation and activation and found various problems. One of these problems relates to when and how a UE performs random access (RACH) to a PSCell. As mentioned above, it has been proposed that the UE need not perform RACH when the SCG is deactivated upon PSCell addition or PSCell change. It has also been proposed that when the PSCell is changed while the SCG is deactivated, the UE does not have to perform the RACH.

However, according to the current 3GPP standard, Access Stratum (AS) security keys (e.g., user plane key (K_{UPenc})) for SCG bearers may need to be configured or updated upon PSCell addition and PSCell change. In addition, according to the current 3GPP standard, when the AS security keys are configured or updated, the UE shall perform a procedure (specifically, a Reconfiguration with Sync procedure) that includes performing a RACH to the PSCell. Therefore, it may be inconsistent or incompatible with the provisions of the current 3GPP standard for the UE to not perform the RACH to the PSCell upon PSCell addition and PSCell change.

Moreover, if the UE does not make a RACH to a PSCell when an SCG including this PSCell is deactivated at the time of PSCell addition, the UE will attempt a RACH to the new PSCell for the first time when the SCG is later activated. Similarly, if the UE does not make a RACH to a new PSCell when the PSCell is changed from the old one to the new one while the SCG is deactivated, the UE will attempt a RACH to the new PSCell for the first time when the SCG is later activated. However, the UE has not yet succeeded in accessing the PSCell once at this point, and the UE may fail the RACH (SCG failure). This may prevent the UE from using the SCG in a timely manner when communication is needed on the SCG.

Another problem that the inventor has obtained relates to the operation of the UE while the SCG is deactivated. Specifically, it is not clear which SCG-related configurations the UE should keep when the SCG is deactivated. According to the current Multi-Radio Dual Connectivity (MR-DC) provisions in the 3GPP standard, upon SCell deactivation, the UE clears the configured downlink assignment and configured uplink grant Type 2. The configured downlink assignment allocates downlink semi-persistent scheduling (SPS) resources to the UE. In the configured downlink assignment, the RRC defines the periodicity of the configured downlink assignment and a configured scheduling Radio Network Temporary Identifier (CS-RNTI), and a Physical Downlink Control Channel (PDCCH) addressing the CS-RNTI semi-persistently allocates Physical Downlink Shared Channel (PDSCH) resources to the UE to activate the configured downlink assignment. On the other hand, the configured uplink grant Type 2 allocates uplink SPS resources to the UE. In the configured uplink grant Type 2, the RRC defines the periodicity and a CS-RNTI of the configured uplink grant, and a PDCCH addressing the CS-RNTI semi-persistently allocates Physical Uplink Shared Channel (PUSCH) resources to the UE to activate the configured uplink grant. In other words, configured grant Type 2 PUSCH transmissions are scheduled semi-persistently by an UL grant contained in valid activation Downlink Control Information (DCI) (i.e., DCI format 0_0 or 0_1) scrambled by the CS-RNTI. In addition, according to the current MR-DC provisions, when the TAT associated with the SCG expires, the UE shall release (or clear) the configured Sounding Reference Signal (SRS) resources and Physical Uplink Control Channel (PUCCH) resources and clear the configured downlink assignment and configured uplink grant.

According to these provisions, for example, when an SCG in which radio bearers using radio resources of the SCG are configured is deactivated, the UE may clear the configured downlink assignment and the configured uplink grant Type 2. If so, however, the UE would need to be re-configured with these radio resources when the SCG is activated. This may result in increased delay in SCG activation. The radio bearers using SCG radio resources are either SCG bearers, split bearers, or both. An SCG radio bearer is a radio bearer having a Radio Link Control (RLC) bearer only within the SCG associated with the SN. On the other hand, a split bearer is a radio bearer that has both an RLC bearer in the Master Cell Group (MCG) associated with the Master Node (MN) and an RLC bearer in the SCG. A SCG bearer and a split bearer may be SN terminated or MN terminated bearers. An SN terminated bearer is a radio bearer for which the Packet Data Convergence Protocol (PDCP) is placed in the SN. An MN terminated bearer is a radio bearer for which the PDCP is placed in an MN.

One of the objects to be attained by embodiments disclosed herein is to provide apparatuses, methods, and programs that contribute to solving at least one of a plurality of problems, including the problems described above. It should be noted that the above-described object is merely one of the objects to be attained by the embodiments disclosed herein. Other objects or problems and novel features will be made apparent from the following description and the accompanying drawings.

### Solution to Problem

A first aspect is directed to a UE configured to support dual connectivity using an MCG associated with a master node and an SCG associated with a secondary node. The UE includes at least one memory and at least one processor coupled to the at least one memory. The at least one processor is configured to, when the SCG containing a PSCell is deactivated upon a PSCell addition or a PSCell mobility, perform random access to the PSCell in response to the PSCell addition or the PSCell mobility without waiting until a future SCG activation.

A second aspect is directed to a radio access network (RAN) node configured to act as a master node associated with an MCG or a secondary node associated with an SCG in dual connectivity for a UE. The RAN node includes at least one memory and at least one processor coupled to the at least one memory. The at least one processor is configured to, when the SCG containing a Primary SCG Cell (PSCell) is deactivated upon PSCell addition or PSCell mobility, indicate to the UE whether or not the UE is required to perform random access to the PSCell without waiting until a future SCG activation.

A third aspect is directed to a method performed by a UE configured to support dual connectivity using an MCG associated with a master node and an SCG associated with a secondary node. The method includes, when the SCG containing a Primary SCG Cell (PSCell) is deactivated upon a PSCell addition or a PSCell mobility, performing random access to the PSCell in response to the PSCell addition or the PSCell mobility without waiting until a future SCG activation.

A fourth aspect is directed to a method performed by a radio access network (RAN) node configured to act as a master node associated with an MCG or a secondary node associated with an SCG in dual connectivity for a UE. The method includes, when the SCG containing a Primary SCG Cell (PSCell) is deactivated upon PSCell addition or PSCell mobility, indicating to the UE whether or not the UE is required to perform random access to the PSCell without waiting until a future SCG activation.

A fifth aspect is directed to a UE configured to support dual connectivity using an MCG associated with a master node and an SCG associated with a secondary node. The UE includes at least one memory and at least one processor coupled to the at least one memory. The at least one processor is configured to keep one or both of a configured downlink assignment associated with a PSCell included in the SCG and a configured uplink grant Type 2 associated with the PSCell while the SCG configured with a radio bearer that uses radio resources of the SCG is deactivated.

A sixth aspect is directed to a radio access network (RAN) node configured to act as a master node associated with an MCG or a secondary node associated with an SCG in dual connectivity for a UE. The RAN node includes at least one memory and at least one processor coupled to the at least one memory. The at least one processor is configured to keep one or both of a configured downlink assignment associated with a PSCell included in the SCG and a configured uplink grant Type 2 associated with the PSCell while the SCG configured with a radio bearer that uses radio resources of the SCG is deactivated.

A seventh aspect is directed to a method performed by a UE configured to support dual connectivity using an MCG associated with a master node and an SCG associated with a secondary node. The method includes keeping one or both of a configured downlink assignment associated with a PSCell included in the SCG and a configured uplink grant Type 2 associated with the PSCell while the SCG configured with a radio bearer that uses radio resources of the SCG is deactivated.

An eighth aspect is directed to a method performed by a radio access network (RAN) node configured to act as a master node associated with an MCG or a secondary node associated with an SCG in dual connectivity for a UE. The method includes keeping one or both of a configured downlink assignment associated with a PSCell included in the SCG and a configured uplink grant Type 2 associated with the PSCell while the SCG configured with a radio bearer that uses radio resources of the SCG is deactivated.

A nineth aspect is directed to a program. The program includes a set of instructions (software codes) that, when loaded into a computer, causes the computer to perform the method according to the third, fourth, seventh, or eighth aspect described above.

### Advantageous Effects of Invention

According to the above aspects, it is possible to provide apparatuses, methodes, and programs that contribute to solving at least one of problems related to SCG deactivation and activation, including the above-mentioned problems.

### Brief Description of Drawings

Fig. 1 shows an example configuration of a radio communication network according to an embodiment;
Fig. 2 shows an example configuration of a secondary node according to an embodiment;
Fig. 3 is a flowchart showing an example of processing performed by a UE according to an embodiment;
Fig. 4 is a flowchart showing an example of processing performed by a UE according to an embodiment;
Fig. 5 is a flowchart showing an example of processing performed by a UE according to an embodiment;
Fig. 6 is a flowchart showing an example of processing performed by a UE according to an embodiment;
Fig. 7 is a flowchart showing an example of processing performed by a UE according to an embodiment;
Fig. 8 is a sequence diagram showing an example of processing performed by a UE and a RAN node according to an embodiment;
Fig. 9 is a sequence diagram showing an example of processing performed by a UE and a RAN node according to an embodiment;
Fig. 10 is a sequence diagram showing an example of processing performed by a UE and a RAN node according to an embodiment;
Fig. 11 is a flowchart showing an example of processing performed by a UE according to an embodiment;
Fig. 12 is a sequence diagram showing an example of processing performed by a UE and a RAN node according to an embodiment;
Fig. 13 is a sequence diagram showing an example of processing performed by a UE and a RAN node according to an embodiment;
Fig. 14 is a sequence diagram showing an example of processing performed by a UE and a RAN node according to an embodiment;
Fig. 15 is a flowchart showing an example of processing performed by a UE according to an embodiment;
Fig. 16 is a flowchart showing an example of processing performed by a UE according to an embodiment;
Fig. 17 is a flowchart showing an example of processing performed by a UE according to an embodiment;
Fig. 18 is a block diagram showing an example configuration of a RAN node according to an embodiment; and
Fig. 19 is a block diagram showing an example configuration of a UE according to an embodiment.

### Example Embodiment

Specific embodiments will be described hereinafter in detail with reference to the drawings. The same or corresponding elements are denoted by the same symbols throughout the drawings, and duplicated explanations are omitted as appropriate for the sake of clarity.

Each of the embodiments described below may be used individually, or two or more of the embodiments may be combined with one another as appropriate. These embodiments include novel features different from each other. Accordingly, these embodiments contribute to attaining objects or solving problems different from one another and also contribute to obtaining advantages different from one another.

The embodiments described below are primarily for the 3GPP Long Term Evolution (LTE) system and fifth generation mobile communications system (5G system). However, these embodiments may be applied to other radio communication systems that support technologies similar to the 3GPP multi-connectivity (e.g., Dual Connectivity). The term "LTE" as used in the present specification includes improvements and enhancements of LTE and LTE-Advanced to enable interworking with 5G systems, unless otherwise noted.

### First Embodiment

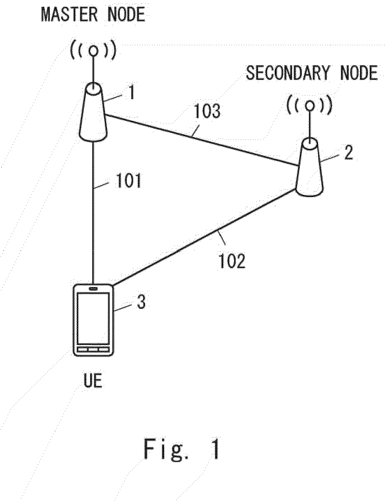

Fig. 1 shows an example configuration of a radio communication network according to a plurality of embodiments including this embodiment. In the example of Fig. 1, the radio communication network includes a RAN node 1, a RAN node 2, and a UE 3. Each element (or network function) shown in Fig. 1 can be implemented, for example, as a network element on dedicated hardware, as a software instance running on dedicated hardware, or as a virtualized function instantiated on an application platform.

The RAN node 1 may be a Central Unit (e.g., eNB-CU or gNB-CU) in a cloud RAN (C-RAN) deployment, or a combination of a CU and one or more Distributed Units (e.g., eNB-DUs or gNB-DUs). The C-RAN is also referred to as CU/DU split. The CU may include a Control Plane (CP) Unit (e.g., gNB-CU-CP) and one or more User Plane (UP) Units (e.g., gNB-CU-UPs). Accordingly, the RAN node 1 may be a CU-CP or a combination of a CU-CP and a CU-UP(s). Similarly, the RAN node 2 may be a CU or a combination of a CU and one or more DUs. The RAN node 2 may be a CU-CP or a combination of a CU-CP and a CU-UP(s).

Each of the RAN nodes 1 and 2 may be an Evolved Universal Mobile Telecommunications System (UMTS) Terrestrial Radio Access Network (EUTRAN) node or a Next generation Radio Access Network (NG-RAN) node. The EUTRAN node may be an eNB or an en-gNB. The NG-RAN node may be a gNB or an ng-eNB. The en-gNB is a node that provides NR user plane and control plane protocol terminations towards a UE and acts as a Secondary Node (SN) in E-UTRA-NR Dual Connectivity (EN-DC). The ng-eNB is a node that provides E-UTRA user plane and control plane protocol terminations towards a UE and is connected to a 5GC via an NG interface. The Radio Access Technology (RAT) of the RAN node 1 may be different from that of the RAN node 2.

The RAN node 1 and the RAN node 2 communicate with each other via an inter-node interface (i.e., X2 interface or Xn interface) 103. The RAN node 1 and the RAN node 2 operate as a Master Node (MN) and a Secondary Node (SN) in dual connectivity, respectively. Hereafter, the RAN node 1 may be referred to as MN 1 and the RAN node 2 may be referred to as SN 2. The UE 3 communicates with the MN 1 and the SN 2 via air interfaces 101 and 102, and performs dual connectivity with a Master Cell Group (MCG) and a Secondary Cell Group (SCG).

This dual connectivity may be Multi-Radio Dual Connectivity (MR-DC). The MR-DC includes E-UTRA-NR Dual Connectivity (EN-DC), NG-RAN E-UTRA-NR Dual Connectivity (NGEN-DC), NR-E-UTRA Dual Connectivity (NE-DC), and NR-NR Dual Connectivity (NR-DC). Accordingly, the MN 1 may be one of a Master eNB (in EN-DC), a Master ng-eNB (in NGEN-DC), and a Master gNB (in NR-DC and NE-DC). Similarly, the SN 2 may be one of an en-gNB (in EN-DC), a Secondary ng-eNB (in NE-DC), and a Secondary gNB (in NR-DC and NGEN-DC). In EN-DC, the UE 3 is connected to an eNB acting as the MN 1 and to an en-gNB acting as the SN 2. In NGEN-DC, the UE 3 is connected to an ng-eNB acting as the MN 1 and to a gNB acting as the SN 2. In NE-DC, the UE 3 is connected to a gNB acting as the MN 1 and to an ng-eNB acting as the SN 2. In NR-DC, the UE 3 is connected to one gNB (or gNB-DU) acting as the MN 1 and to another gNB (or gNB-DU) acting as the SN 2.

The MCG is a group of serving cells associated with (or provided by) the MN 1, including the SpCell (i.e., Primary Cell (PCell)) and optionally one or more Secondary Cells (SCells). Meanwhile, the SCG is a group of serving cells associated with (or provided by) the SN 2 and includes the Primary SCG Cell (PSCell) and optionally one or more Secondary Cells (SCells). The PSCell is the Special Cell (SpCell) of the SCG and supports Physical Uplink Control Channel (PUCCH) transmission and contention-based Random Access. In LTE (e.g., LTE-DC and NE-DC), PSCell may be an abbreviation of Primary SCell.

As used in the present specification, the term "primary SCG cell" and its abbreviation "PSCell" stands for a cell that is included in a cell group provided by an SN in dual connectivity, has an uplink component carrier, and is configured with uplink control channel (e.g., PUCCH) resources. Specifically, the term "primary SCG cell" and its abbreviation "PSCell" may refer to a Primary SCG Cell of a cell group provided by an SN (e.g., en-gNB in EN-DC, gNB in NGEN-DC, or gNB in NR-DC) supporting 5G NR, or may refer to a Primary SCell of a cell group provided by an SN (e.g., eNB in LTE DC, or ng-eNB in NE-DC) supporting E-UTRA.

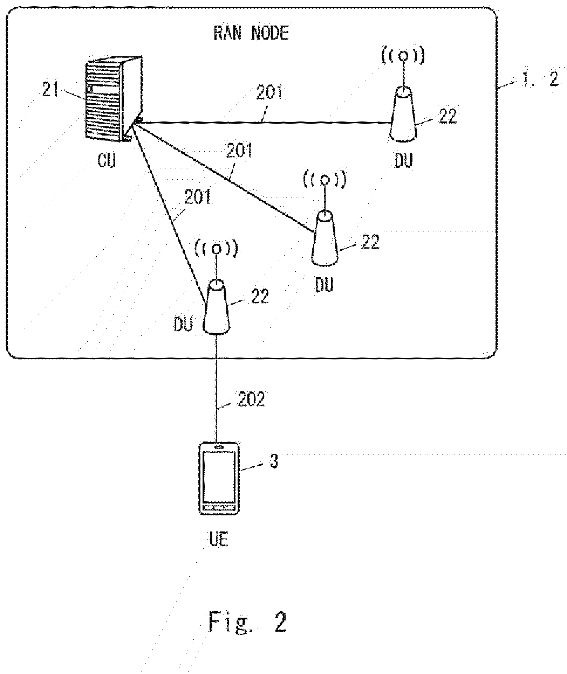

One or both of the MN 1 and SN 2 may have the configuration shown in Fig. 2. Each element (network function) shown in Fig. 2 can be implemented, for example, as a network element on dedicated hardware, as a software instance running on dedicated hardware, or as a virtualized function instantiated on an application platform. One or both of the RAN nodes 1 and 2 may include, but are not limited to, a CU 21 and one or more DUs 22 as shown in Fig. 2. The CU 21 is connected each DU 22 via an interface 201. The UE 3 is connected to at least one DU 22 via at least one air interface 202.

The CU 21 may be a logical node that hosts Radio Resource Control (RRC), Service Data Adaptation Protocol (SDAP), and Packet Data Convergence Protocol (PDCP) protocols of the gNB (or hosts the RRC and PDCP protocols of the gNB). The DU 22 may be a logical node that hosts Radio Link Control (RLC), Medium Access Control (MAC), and Physical (PHY) layers of the gNB. If the CU 21 is a gNB-CU and the DUs 22 are gNB-DUs, then the interfaces 201 may be F1 interfaces. The CU 21 may include a CU-CP and a CU-UP(s).

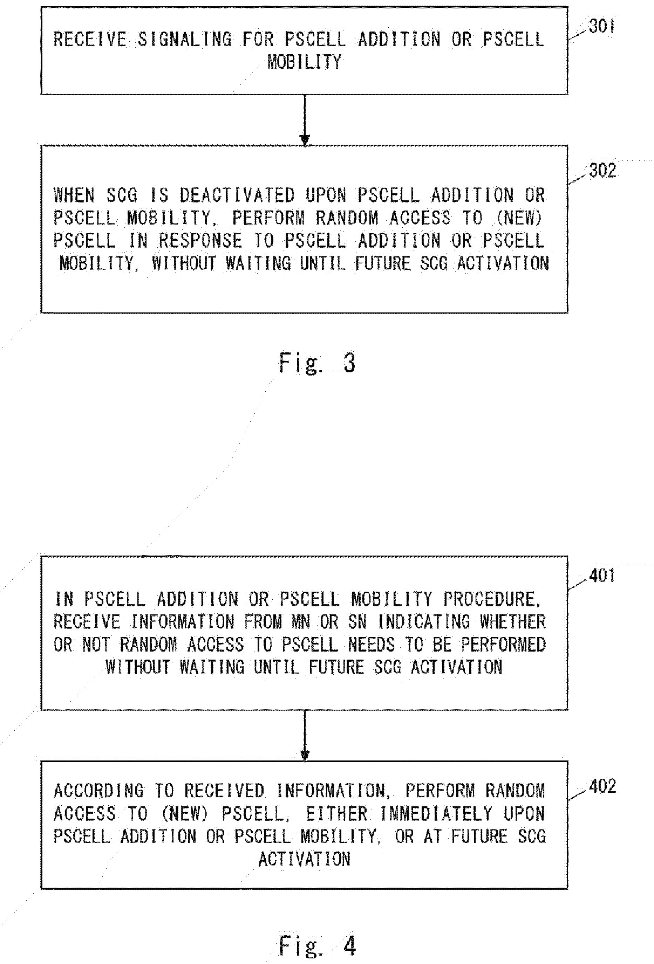

The following describes behavior of the MN 1, SN 2, and UE 3 with respect to deactivation of the SCG associated with the SN 2. Fig. 3 shows an example of the operation of the UE 3. In step 301, the UE 3 receives signaling for PSCell addition or PSCell mobility. The PSCell addition involves adding a PSCell associated with the SN 2. The PSCell mobility may be an intra-SN PSCell change, an inter-SN PSCell change, a PSCell reconfiguration, or a SCG reconfiguration following a handover (MN change). In some implementations, the UE 3 receives from the SN 2 via the MN 1 an SN RRC Reconfiguration message containing a configuration regarding the PSCell. The configuration regarding the PSCell may include an SpCellConfig field contained in a CellGroupConfig Information Element (IE).

The PSCell addition or PSCell mobility in step 301 may be accompanied by deactivation of the SCG. The SCG may be deactivated during the PSCell addition or PSCell mobility. The PSCell mobility may take place while the SCG is deactivated. In other words, during the PSCell mobility while the SCG is deactivated, the SCG may be kept (or maintained) in the deactivated state.

In step 302, when the SCG is deactivated upon the PSCell addition or PSCell mobility, the UE 3 performs random access to the (new) PSCell in response to the PSCell addition or PSCell mobility, without waiting until a future SCG activation. The random access may be referred to as RACH or RACH procedure.

In some implementations, the UE 3 may perform random access to the PSCell immediately, without waiting until a future SCG activation, when any one of one or more specific PSCell addition and PSCell mobility procedures with SCG deactivation among the multiple procedures for PSCell addition and PSCell mobility with SCG deactivation is performed. If other PSCell addition or PSCell mobility procedures with SCG deactivation are performed, the UE 3 may not perform random access to the PSCell immediately, but may do so at a future SCG activation.

In some implementations, the PSCell addition and PSCell mobility that cause the UE 3 to immediately perform random access to the PSCell may instruct the UE 3 to deactivate the SCG and cause the UE 3 to configure or update an AS security key(s) for a radio bearer(s) that uses radio resources of the SCG. In other words, if the PSCell addition or PSCell mobility instructs the UE 3 to deactivate the SCG and causes the UE 3 to configure or update an AS security key(s) for a radio bearer(s) that uses radio resources of the SCG, then the UE 3 may perform random access to the PSCell immediately without waiting until a future SCG activation. The radio bearer(s) using SCG radio resources may be an SCG bearer(s) or a split bearer(s) or both. The radio bearer(s) that uses radio resources of the SCG may be a data radio bearer(s) (DRB(s)) or a signalling radio bearer(s) (SRB(s)). The AS security key(s) to be updated may be one or any combination of a secondary node key (e.g., S-K_{gNB}), an integrity protection key for RRC signaling (e.g., K_{RRCint}), an encryption key for RRC signaling (e.g., K_{RRCenc}), an integrity protection key for user data (e.g., K_{UPint}), and an encryption key for user data (e.g., K_{UPenc}). As mentioned above, according to the current 3GPP standard, when AS security keys are configured or updated, the UE shall perform a procedure (specifically, Reconfiguration with Sync procedure) that includes performing a RACH to the PSCell. The operation described above can make the behavior of the UE 3 when the PSCell addition and PSCell mobility accompanied by SCG deactivation are performed consistent with the provisions of the current 3GPP standard.

In some implementations, in the procedure of PSCell addition or PSCell mobility with SCG deactivation, the MN 1 or the SN 2 may send information to the UE 3 indicating whether random access to the PSCell needs to be performed immediately in response to the PSCell addition or PSCell mobility without waiting until a future SCG activation. In this case, the UE 3 may operate as shown in Fig. 4. Fig. 4 shows an example of the operation of the UE 3. In step 401, in the PSCell addition or PSCell mobility procedure, the UE 3 receives information from the MN 1 or SN 2 indicating whether or not random access to the PSCell needs to be immediately performed without waiting until a future SCG activation. In step 401, according to the received information, the UE 3 performs random access to the (new) PSCell, either immediately upon the PSCell addition or PSCell mobility, or at a future SCG activation.

In one example, if AS security keys for the SCG need to be configured or updated, then the MN 1 or SN 2 may explicitly or implicitly indicate to the UE 3 that random access to the PSCell needs to be performed in response to the PSCell addition or PSCell mobility without waiting until a future SCG activation. This can contribute to making the behavior of the UE 3 when PSCell addition and PSCell mobility with SCG deactivation takes place consistent with the provisions of the current 3GPP standard.

In another example, if the SCG containing the PSCell is deactivated upon PSCell addition, then the MN 1 or SN 2 may explicitly or implicitly indicate to the UE 3 that random access to the PSCell needs to be performed upon the PSCell addition without waiting until a future SCG activation. Additionally or alternatively, if the PSCell is changed from the current one to the new one while the PSCell is deactivated, the MN 1 or SN 2 may indicate to the UE 3 that random access to the new PSCell needs to be performed in response to the PSCell change without waiting until a future SCG activation. This allows the UE 3 to check that it can connect to the (new) PSCell and establish synchronization with the PSCell in the event of the PSCell addition or PSCell change. The UE 3 may receive a Time Advance (TA) command from the PSCell during random access upon the PSCell addition or PSCell change, start a Time Alignment Timer (TAT), and keep the TAT running while the SCG is deactivated. This can contribute to allowing the UE 3 to omit random access and use the SCG in a timely manner when the SCG is activated in the future. This can also contribute to improving the success rate of random access compared to performing random access for the first time at a future SCG activation.

The information that explicitly or implicitly indicates to the UE 3 whether or not random access to the PSCell is required immediately may be an Information Element (IE) or flag contained in an MN RRC Reconfiguration message generated by the MN 1, SN RRC Reconfiguration message generated by the SN 2, or Medium Access Control (MAC) Control Element (CE) of the MCG. In other words, the MN 1 or SN 2 may include an IE or a flag in an MN RRC Reconfiguration message, SN RRC Reconfiguration message, or MCG MAC CE in order to indicate to the UE 3 whether or not random access to the PSCell needs to be performed immediately.

The SN 2 may send the information indicating whether random access to the PSCell needs to be performed immediately or not to the UE 3 using an RRC Reconfiguration message (SN RRC Reconfiguration message) generated by the SN 2. The SN RRC Reconfiguration message may be sent to the UE 3 through the MN 1 and the MCG. Specifically, during a procedure that causes PSCell addition or PSCell mobility to the UE 3, the SN 2 sends an SN RRC Reconfiguration message (or a transparent container to be sent to the UE 3) in an inter-node message (e.g., CG-Config) to the MN 1, and the MN 1 may send the received SN RRC Reconfiguration message to the UE 3 via an MN RRC Reconfiguration message. The procedure that causes PSCell addition or PSCell mobility to the UE 3 is, for example, an SN addition procedure, SN modification procedure, SN change procedure, PSCell change procedure, or inter-MN handover procedure.

The SN 2 may use a random access channel configuration for the PSCell included in an RRC Reconfiguration message to indicate to the UE 3 whether or not random access to the PSCell needs to be made immediately. The random access channel configuration for the PSCell may be contained in a reconfigurationWithSync field contained in a SpCellConfig field in a CellGroupConfig IE regarding the SCG. More specifically, the reconfigurationWithSync field contains a rach-ConfigDedicated field (or rach-ConfigDedicated IE), and the rach-ConfigDedicated field contains a CFRA field. The CFRA field configures the UE 3 with radio resources for Contention-free random access (CFRA). In addition, the reconfigurationWithSync field may contain an spCellConfigCommon field (or ServingCellConfigCommon IE), and the spCellConfigCommon field may contain an uplinkConfigCommon field (or uplinkConfigCommon IE). The uplinkConfigCommon field contains an initialUplinkBWP field (or BWP-UplinkCommon IE), and the initialUplinkBWP field contains a rach-ConfigCommon field (or rach-ConfigCommon IE).

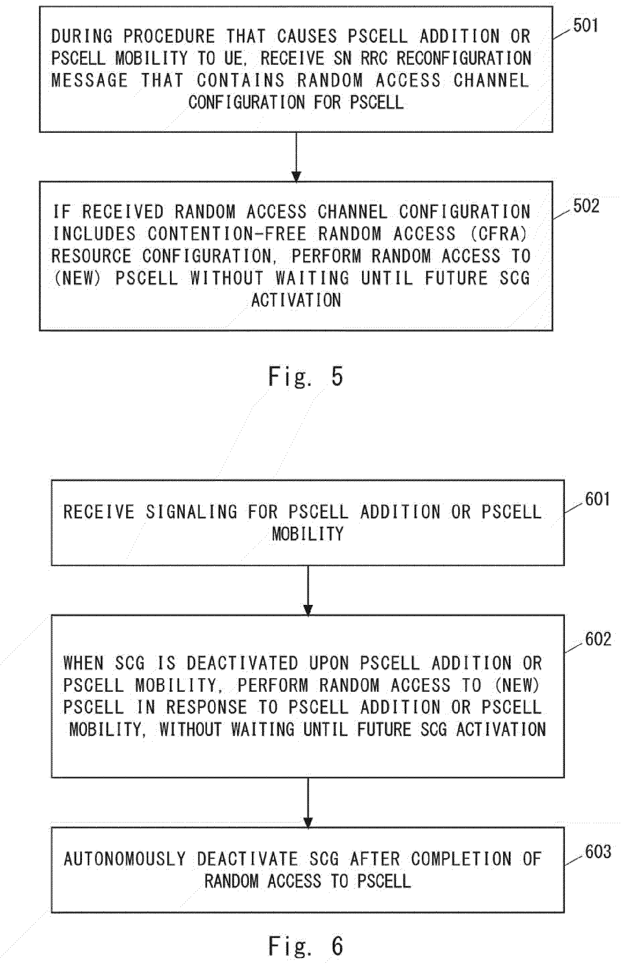

In some implementations, the SN 2 may include a configuration of contention-free random access (CFRA) resources into the random access channel configuration of the PSCell, thereby indicating to the UE 3 that random access to the PSCell needs to be performed upon the PSCell addition or PSCell mobility without waiting until a future SCG activation. Fig. 5 shows an example of the operation of the UE 3. In step 501, during a procedure that causes PSCell addition or PSCell mobility to the UE 3, the UE 3 receives an SN RRC Reconfiguration message that contains a random access channel configuration for the PSCell. In step 502, if the received random access channel configuration includes a CFRA resource configuration, then the UE 3 performs random access to the (new) PSCell using the configured CFRA resources without waiting until a future SCG activation. In contrast, if the received random access channel configuration does not contain a CFRA resource configuration, but only a contention-based random access (CBRA) configuration, then the UE 3 may complete the PSCell addition or PSCell mobility without random access to the PSCell and perform random access to the PSCell using the configured CBRA resources when the SCG is activated in the future. Even if the SCG is activated in the future by an instruction (or request) from the MN 1, the UE 3 may perform random access using the random access channel configuration (e.g., CBRA resources) that it had received from the SN 2.

In some implementations, when the MN 1 determines to deactivate the SCG, it may also determine if random access to the PSCell needs to be made immediately by the UE 3. When the MN 1 notifies the SN 2 of an indication (or request) to deactivate the SCG, it may also notify the SN 2 that random access to the PSCell needs to be performed by the UE 3 immediately. Alternatively, the MN 1 may notify the SN 2 of an indication (or request) to deactivate the SCG, and in response, the SN 2 may determine whether random access to the PSCell needs to be performed immediately by the UE 3 or not. In some other implementations, when the SN 2 decides to deactivate the SCG, it may also decide whether random access to the PSCell needs to be made immediately by the UE 3.

As explained above, when an SCG is deactivated upon PSCell addition or PSCell mobility, the UE 3 in this embodiment may perform random access to a (new) PSCell in response to the PSCell addition or PSCell mobility without waiting until a future SCG activation. After this random access, the UE 3 and the network (MN 1 and SN 2) may operate as follows.

In some implementations, the UE 3 may autonomously deactivate the SCG after the random access to the PSCell is successfully completed. In other words, the UE 3 may autonomously deactivate the SCG after confirming successful random access to the PSCell. Similarly, the SN 2 may autonomously deactivate the SCG after the random access to the PSCell by the UE 3 has been successfully completed. Fig. 6 shows an example of the operation of the UE 3. In steps 601 and 602, the UE 3 operates in the same manner as it does in steps 301 and 302 of Fig. 3. In step 603, the UE 3 autonomously deactivates the SCG after the random access to the PSCell is successfully completed. In the case of CFRA, the successful completion may be determined by the receipt of a Random Access Response (RAR) by the UE 3. In the case of 4-step CBRA, the successful completion may be determined by the confirmation of the Contention Resolution by the UE 3 (i.e., receipt of the fourth message (Msg4) or receipt of a PDCCH (e.g., containing UL grant information but with zero grant size or invalid value) corresponding to the C-RNTI (i.e., C-RNTI MAC CE) sent in the third message (Msg3)). In the case of 2-step CBRA, the successful completion may be determined by the confirmation of the Contention Resolution by the UE 3 (i.e., receipt of Message B (MsgB)).

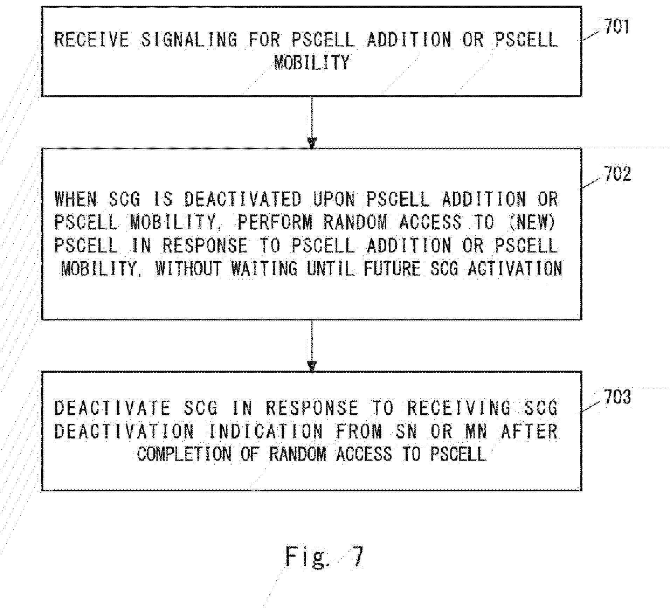

In other implementations, the UE 3 may deactivate the SCG in response to receiving an indication of SCG deactivation from the SN 2 or MN 1 after the random access to the PSCell has been successfully completed. The SN 2 or the MN 1 may send an indication of SCG deactivation to the UE 3 after confirming the successful random access to the PSCell by the UE 3. The SCG deactivation indication may be sent from the MCG to the UE 3 or directly from the SCG to the UE 3. The SCG deactivation indication may be sent from the SN 2 to the UE 3 via the MN 1. The SCG deactivation indication may be sent to the UE 3 via physical layer signaling (e.g., DCI on PDCCH), via MAC layer signaling (e.g., MAC CE), or via RRC layer signaling. Fig. 7 shows an example of the operation of the UE 3. In steps 701 and 702, the UE 3 operates in the same manner as it does in steps 301 and 302 of Fig. 3. In step 703, the UE 3 deactivates the SCG in response to receiving an SCG deactivation indication from the SN 2 or MN 1 after the random access to the PSCell has been successfully completed. In the case of 4-step CBRA, the successful completion may be determined by the confirmation of the Contention Resolution by the UE 3 (i.e., receipt of the fourth message (Msg4)). In the case of 2-step CBRA, the successful completion may be determined by the confirmation of the Contention Resolution by the UE 3 (i.e., receipt of Message B (MsgB)).

The MN 1 or SN 2 may indicate to the UE 3 whether step 603 of Fig. 6 or step 703 of Fig. 7 should be performed. In other words, the MN 1 or SN 2 may indicate to the UE 3 whether the UE 3 should autonomously deactivate the SCG after successful completion of random access to the PSCell or not. The UE 3 may receive information from the MN 1 or SN 2 indicating whether the UE 3 should autonomously deactivate the SCG after successful completion of random access to the PSCell or not. The UE 3 may determine whether to perform step 603 in Fig. 6 or step 703 in Fig. 7 according to the information received. This information may be included in an MN RRC Reconfiguration message or SN RRC Reconfiguration message sent to the UE 3 during a procedure that causes PSCell addition or PSCell mobility to the UE 3.

During the period of time that the UE 3 performs random access to the PSCell and deactivates the SCG upon completion of the random access, the UE 3 may activate the SCG temporarily. Alternatively, the UE 3 may keep the SCG in a deactivated state for this period of time. In other words, the UE 3 may activate, validate, or restore only the settings necessary for random access to the PSCell.

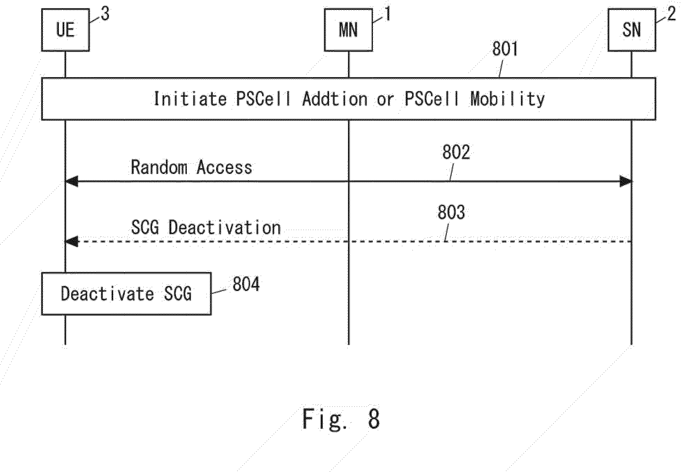

Fig. 8 shows an example of the operations of the MN 1, SN 2, and UE 3. In step 801, the MN 1 or SN 2 initiates a PSCell addition or PSCell mobility procedure, and the MN 1, SN 2, and UE 3 perform it. The PSCell addition procedure (or SN addition procedure) is initiated by the MN 1. The PSCell mobility procedure is initiated by the MN 1 or SN 2. The PSCell addition procedure and PSCell mobility procedure in step 801 involve deactivation of the SCG. The PSCell mobility procedure may be initiated while the SCG is deactivated.

During the PSCell addition procedure or PSCell mobility procedure, the MN 1 or SN 2 instructs the UE 3 to deactivate the SCG. During the PSCell addition procedure or PSCell mobility procedure, the SN 2 may send an SN RRC Reconfiguration message containing an SCG deactivation instruction (or indication) to the UE 3 via the MN 1. The SN RRC Reconfiguration message may contain new or updated SCG configurations in addition to the SCG deactivation instruction (or indication). The MN 1 may send to the UE 3 an MN RRC Reconfiguration message carrying this SN RRC Reconfiguration message.

In step 801, the MN 1 or SN 2 may send information to the UE 3 indicating explicitly or implicitly whether or not random access to the PSCell needs to be performed immediately without waiting until a future SCG activation. This information may be included in the SN RRC Reconfiguration message or MN RRC Reconfiguration message described above.

In step 802, the UE 3 performs random access to the PSCell. If the random access is successfully completed, the UE 3 deactivates the SCG (step 804). In some implementations, the SN 2 or MN 1 may send an SCG deactivation indication to the UE 3 (step 803), and the UE 3 may deactivate the SCG in response to receipt of this indication. In other implementations, the UE 3 may autonomously deactivate the SCG. In this case, the transmission in step 803 may be omitted. In still other implementations, the UE 3 may decide whether to autonomously deactivate the SCG according to instructions from the SN 2 or MN 1. Such instructions may be included in the SN RRC Reconfiguration message or MN RRC Reconfiguration message described above sent in step 801.

The indication in step 803 may be sent from the DU 22 of the SN 2 to the UE 3 in physical layer signaling (e.g., DCI on a PDCCH) or in MAC layer signaling (e.g., MAC CE). In this case, the DU 22 may notify the CU 21 of the SCG deactivation completion (or execution). In addition, if the decision to deactivate the SCG is made by the SN 2, the DU 22 may decide it. The DU 22 may notify the CU 21 in advance that the SCG is to be deactivated (or send information indicating deactivation of the SCG) and thus omit notifying the CU 21 after performing the SCG deactivation in step 803. The deactivation notification from the DU 22 to the CU 21 may be sent, for example, in a UE Context Modification Required, UE Context Setup Response, or UE Context Modification Response in the F1AP, or in a new Control Plane message from the DU 22 to the CU 21. Alternatively, the deactivation notification may be sent via a User Plane message from the DU 22 to the CU 21. In this case, the notification may be sent, for example, in a Downlink Data Delivery Status (DDDS) or in a newly defined frame.

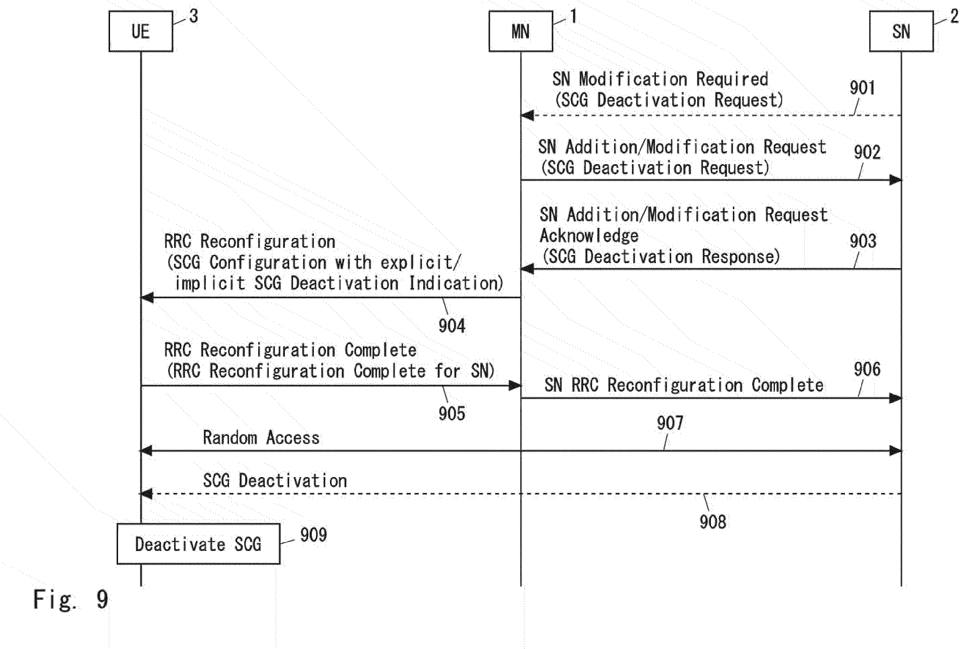

Fig. 9 shows an example of the operations of the MN 1, SN 2, and UE 3. Fig. 9 shows the details of the procedure shown in Fig. 8. Steps 901 to 906 are signaling and processing performed in an SN addition procedure or SN modification procedure, and correspond to step 801 in Fig. 8. The signaling and processing of steps 901 to 906 are essentially identical to those in the existing SN addition procedure or SN modification procedure. However, an SN Modification Required message (step 901) sent from the SN 2 to the MN 1 in an SN-initiated SN modification procedure may include an SCG deactivation request (or indication). Similarly, in step 902, an SN Addition Request message or SN Modification Request message sent from the MN 1 to the SN 2 may contain an SCG deactivation request (or indication). In step 903, an SN Addition Request Acknowledge message or SN Modification Request Acknowledge message sent from the SN 2 to the MN 1 may include an SCG deactivation response (or indication). In step 904, an MN RRC Reconfiguration message sent from the MN 1 to the UE 3 contains an SCG configuration and may also contain an explicit or implicit SCG deactivation indication. These SCG configuration and SCG deactivation indication may be included in an SN RRC Reconfiguration message carried by the MN RRC Reconfiguration message. Steps 907 to 909 are similar to steps 802 to 804 in Fig. 8.

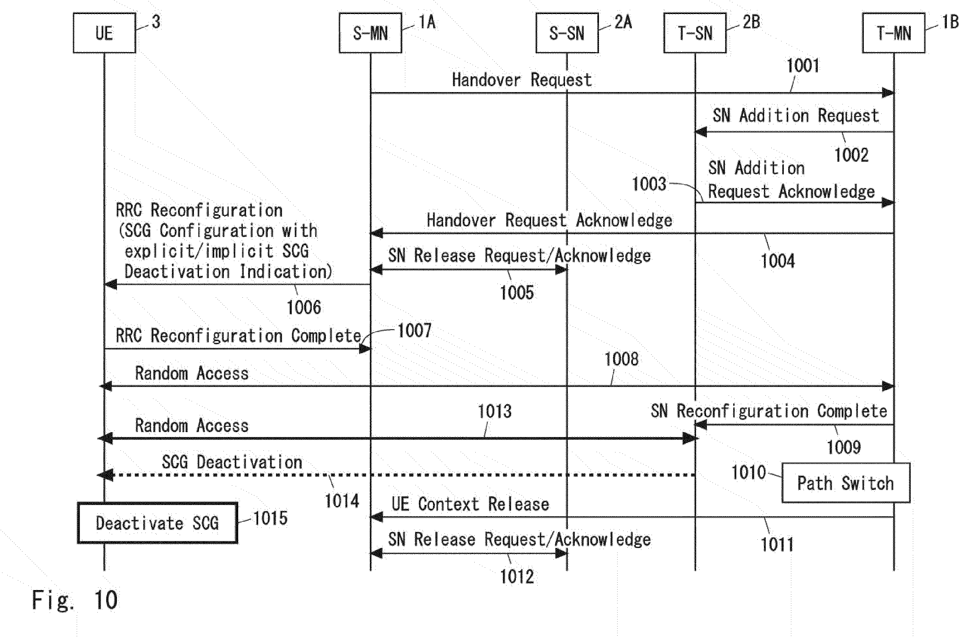

Fig. 10 shows an example of the operations of the MN 1, SN 2, and UE 3. Fig. 10 shows the details of the procedure shown in Fig. 8. Steps 1001 to 1012 are signaling and processing performed in an inter-MN handover procedure and correspond to step 801 in Fig. 8. Note that in the case of inter-MN handover without SN change, the target SN 2B is the same as the source SN 2A. The signaling and processing in steps 1001 to 1012 are basically identical to those in the existing inter-MN handover procedure. However, in step 1002, an SN Addition Request message sent from the target MN 1B to the target SN 2B may include an SCG deactivation request (or indication). In step 1003, an SN Addition Request Acknowledge message sent from the target SN 2B to the target MN 1B may include an SCG deactivation response (or indication). In step 1006, an MN RRC Reconfiguration message sent from the MN 1 to the UE 3 contains an SCG configuration and may also contain an explicit or implicit SCG deactivation indication. These SCG configuration and SCG deactivation indication may be included in an SN RRC Reconfiguration message carried by the MN RRC Reconfiguration message. Steps 1013 to 1015 are similar to steps 802 to 804 in Fig. 8.

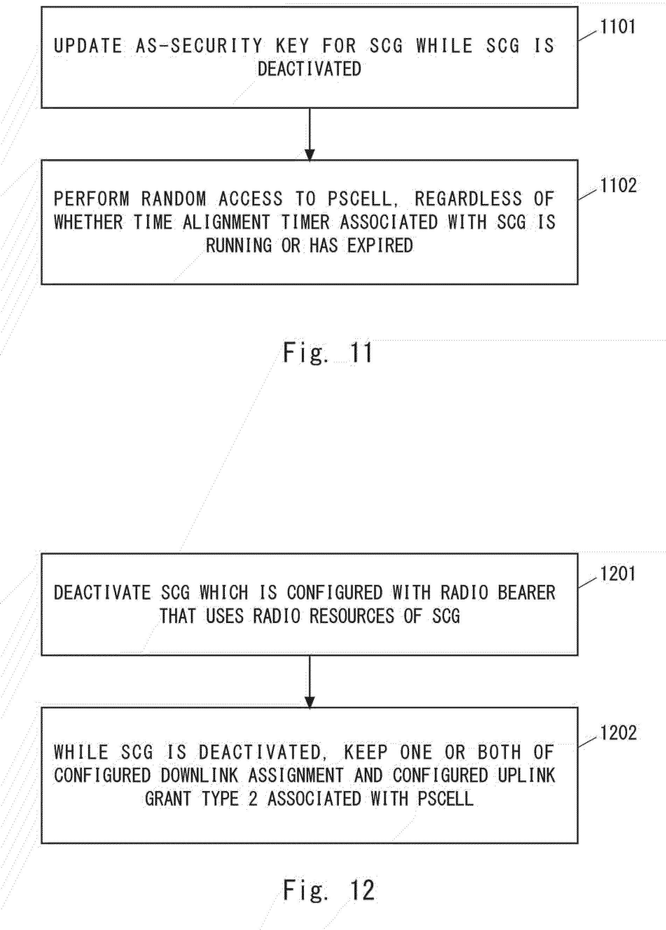

When an AS security key for a radio bearer using radio resources of an SCG needs to be updated, the UE 3 in this embodiment may perform random access to the PSCell regardless of whether the Time Alignment Timer (TAT) associated with the SCG (i.e., the PSCell of the SCG) is running or has expired. This can contribute to allowing the UE 3 to omit random access and use the SCG in a timely manner when the SCG is activated in the future. Fig. 11 shows an example of the operation of the UE 3. In step 1101, the UE 3 updates an AS security key(s) for the SCG. The AS security key(s) to be updated may be one or any combination of a secondary node key (e.g., S-K_{gNB}), an integrity protection key for RRC signaling (e.g., K_{RRCint}), an encryption key for RRC signaling (e.g., K_{RRCenc}), an integrity protection key for user data (e.g., K_{UPint}), and an encryption key for user data (e.g., K_{UPenc}). In step 1102, the UE3 performs a random access to the PSCell, regardless of whether the TAT associated with the SCG is running or has expired. These may be applied while the SCG is deactivated or at the time the SCG is being deactivated.

The PSCell addition in this embodiment may be a conditional PSCell addition (CPA). The PSCell mobility in this embodiment may be an inter-MN conditional handover (CHO) or a conditional PSCell change (CPC). The conditional PSCell change may be an intra-SN conditional PSCell change or an inter-SN conditional PSCell change. If multiple candidate target cells belong to different candidate target MNs in the inter-MN conditional handover, each candidate target MN (and each candidate target SN associated with that MN) may decide whether to deactivate the SCG. If multiple candidate target PSCells are configured in the intra-SN conditional PSCell change, the SN may decide whether to deactivate the SCG. If multiple candidate PSCells belong to different candidate SNs in the conditional PSCell addition, the MN or each candidate SN may decide whether to deactivate the SCG. If multiple candidate target PSCells belong to different candidate target SNs in the inter-SN conditional PSCell change, the MN or each candidate target SN may decide whether to deactivate the SCG. In addition, the information transmitted in the RRC messages described above (e.g., MN RRC Reconfiguration, SN RRC Reconfiguration) may be included in Conditional Reconfiguration IEs contained in those RRC messages.

### Second Embodiment

The example configuration of a radio communication network according to this embodiment is similar to the examples shown in Figs. 1 and 2. The following describes the behavior of the MN 1, SN 2, and UE 3 with respect to deactivation of an SCG associated with the SN 2.

Fig. 12 shows an example of the operation of the UE 3. In step 1201, the UE 3 deactivates an SCG which is configured with one or more radio bearers that use radio resources of the SCG. The radio bearer(s) may include an SCG bearer(s) or a split bearer(s) or both. An SCG radio bearer is a radio bearer having an RLC bearer only within the SCG associated with the SN 2. A split bearer, on the other hand, is a radio bearer that has both an RLC bearer in the MCG associated with the MN 1 and an RLC bearer in the SCG. A SCG bearer and a split bearer may be SN terminated bearers or MN terminated bearers. An SN terminated bearer is a radio bearer for which the PDCP is placed in the SN 2. An MN terminated bearer is a radio bearer for which the PDCP is placed in an MN 1. The radio bearer(s) using SCG radio resources may be a data radio bearer(s) (DRB(s)) or a signaling radio bearer(s) (SRB(s)).

In step 1202, while the SCG that has been configured with a radio bearer(s) that uses radio resources of the SCG is deactivated, the UE 3 keeps one or both of a configured downlink assignment associated with the PSCell and a configured uplink grant Type 2 associated with the PSCell. Similar to the UE 3, while the SCG that has been configured with a radio bearer(s) that uses radio resources of the SCG is deactivated, the network (i.e., SN (or SN 2 and MN 1)) maintains one or both of the configured downlink assignment associated with the PSCell and the configured uplink grant Type 2 associated with the PSCell. In step 1202, the UE 3 maintains radio resource configurations (including one or both of the configured downlink assignment and configured uplink grant Type 2 associated with the PSCell), but may ignore them. After that, when the SCG is activated, the UE 3 and the network may activate, enable, or restore the maintained radio resource configurations (including one or both of the configured downlink assignment and configured uplink grant Type 2 associated with the PSCell). According to the operation of Fig. 12, when the SCG is activated, the UE 3 does not need to be reconfigured with these radio resources. Accordingly, this can contribute to reducing the delay of the SCG activation.

The configured downlink assignment assigns downlink semi-persistent scheduling (SPS) resources to a UE. In the configured downlink assignment, the RRC defines the periodicity of the configured downlink assignment and a configured scheduling Radio Network Temporary Identifier (CS-RNTI), and a Physical Downlink Control Channel (PDCCH) addressing the CS-RNTI semi-persistently allocates Physical Downlink Shared Channel (PDSCH) resources to the UE to activate the configured downlink assignment. On the other hand, the configured uplink grant Type 2 allocates uplink SPS resources to a UE. In the configured uplink grant Type 2, the RRC defines the periodicity and a CS-RNTI of the configured uplink grant, and a PDCCH addressing the CS-RNTI semi-persistently allocates Physical Uplink Shared Channel (PUSCH) resources to the UE to activate the configured uplink grant. In other words, configured grant Type 2 PUSCH transmissions are scheduled semi-persistently by an UL grant contained in valid activation Downlink Control Information (DCI) (i.e., DCI format 0_0 or 0_1) scrambled by the CS-RNTI.

In the operation of Fig. 12, while the SCG is deactivated, the UE 3 may maintain one or both of the configured downlink assignment and configured uplink grant Type 2 only for the PSCell. In other words, while the SCG is deactivated, the UE 3 may clear or release the configured downlink assignment and configured uplink grant Type 2 associated with one or more SCells in the SCG. Alternatively, while the SCG is deactivated, the UE 3 may maintain one or both of the configured downlink assignment and configured uplink grant Type 2 for all cells in the SCG.

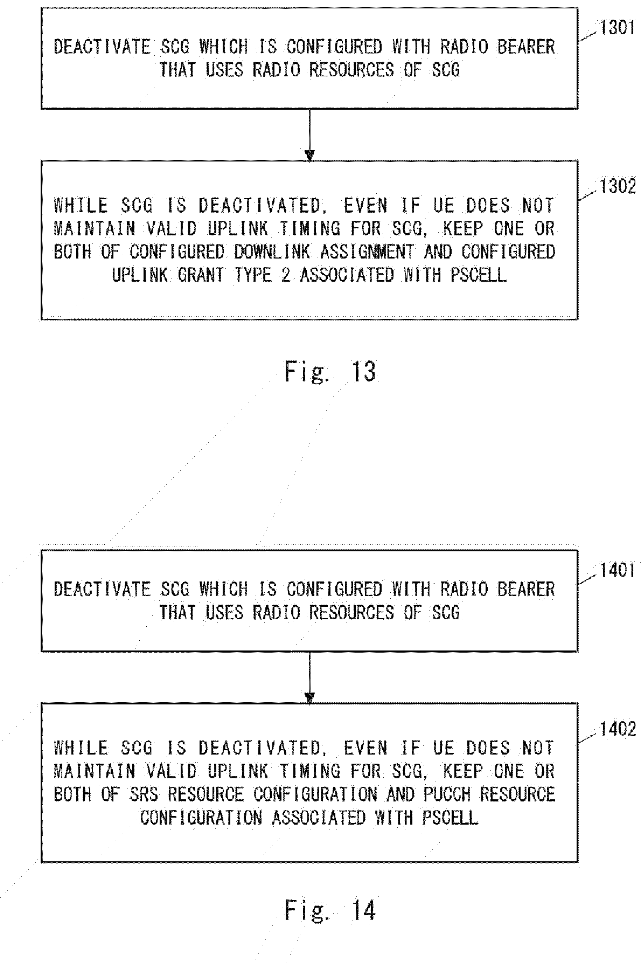

Fig. 13 shows an example of the operation of the UE 3. The operation shown in Fig. 13 can be combined with the operation shown in Fig. 12. Step 1301 is similar to step 1201 in Fig. 12. Specifically, in step 1301, the UE 3 deactivates an SCG which has been configured with one or more radio bearers that use radio resources of the SCG. In step 1302, while the SCG is deactivated, even if the UE 3 does not maintain valid uplink timing for the SCG, the UE 3 maintains one or both of a configured downlink assignment associated with the PSCell and configured uplink grant Type 2 associated with the PSCell. In other words, the UE 3 maintains one or both of the configured downlink assignment and the configured uplink grant Type 2 even if a Time Alignment Timer (TAT) of the PSCell expires while the SCG is deactivated. The UE 3 may further retain a configured uplink grant Type 1. Similar to the UE 3, while the SCG is deactivated, the network (i.e., SN (or SN 2 and MN 1)) retains one or both of the configured downlink assignment associated with the PSCell and the configured uplink grant Type 2 associated with the PSCell, even if the UE 3 does not maintain valid uplink timing for the SCG. The network may further maintain a configured uplink grant Type 1. In step 1302, the UE 3 maintains radio resource configurations (including one or both of the configured downlink assignment and configured uplink grant Type 2 associated with the PSCell), but may ignore them. After that, when the SCG is activated, the UE 3 and the network may activate, enable, or restore the maintained radio resource configurations (including one or both of the configured downlink assignment and configured uplink grant Type 2 associated with the PSCell). According to the operation of Fig. 13, when the SCG is activated, the UE 3 does not need to be reconfigured with these radio resources. Accordingly, this can contribute to reducing the delay of the SCG activation.

An indication (or notification) of SCG activation sent from the MN 1 or SN 2 to the UE 3 may contain information that permits (or instructs) the UE 3 to activate, validate, or restore the maintained radio resource configurations (including one or both of the configured downlink assignment and configured uplink grant Type 2 associated with the PSCell).

In the operation of Fig. 13, while the SCG is deactivated, the UE 3 may maintain one or both of the configured downlink assignment and configured uplink grant Type 2 only for the PSCell. In other words, while the SCG is deactivated, the UE 3 may clear or release the configured downlink assignment and configured uplink grant Type 2 associated with one or more SCells in the SCG. Alternatively, while the SCG is deactivated, the UE 3 may maintain one or both of the configured downlink assignment and configured uplink grant Type 2 for all cells in the SCG.

Fig. 14 shows an example of the operation of the UE 3. The operation shown in Fig. 14 can be combined with the operation shown in one or both Fig. 12 and Fig. 13. Step 1401 is similar to step 1201 in Fig. 12 and step 1301 in Fig. 13. Specifically, in step 1401, the UE 3 deactivates an SCG which has been configured with one or more radio bearers that use radio resources of the SCG. In step 1402, while the SCG is deactivated, even if the UE 3 does not maintain valid uplink timing for the SCG, the UE 3 retains one or both of an SRS resource configuration and PUCCH resource configuration associated with the PSCell. In other words, the UE 3 maintains one or both of the SRS resource configuration and PUCCH resource configuration associated with the PSCell even if a Time Alignment Timer (TAT) for the PSCell expires while the SCG is deactivated. Similar to the UE 3, while the SCG is deactivated, even if the UE 3 does not maintain valid uplink timing for the SCG, the network (i.e., SN (or SN 2 and MN 1)) maintains one or both of the SRS resource configuration and PUCCH resource configuration associated with the PSCell. In step 1402, the UE 3 maintains radio resource configurations (including one or both of the SRS resource configuration and PUCCH resource configuration associated with the PSCell), but may ignore them. After that, when the SCG is activated, the UE 3 and the network may activate, enable, or restore the maintained radio resource configurations (including one or both of the SRS resource configuration and PUCCH resource configuration associated with the PSCell). According to the operation of Fig. 14, when the SCG is activated, the UE 3 does not need to be reconfigured with these radio resources. Accordingly, this can contribute to reducing the delay of the SCG activation.

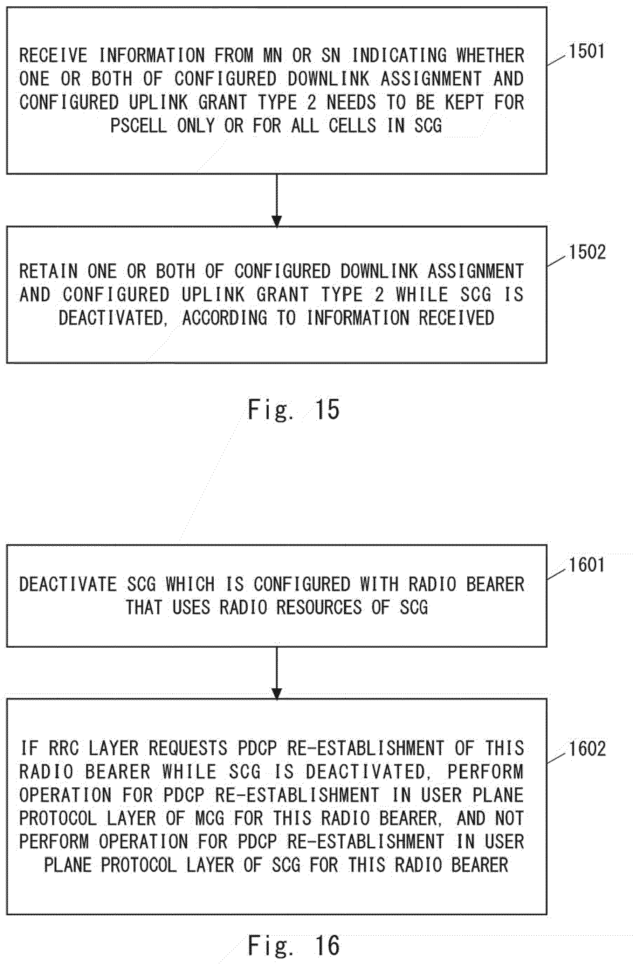

Fig. 15 shows an example of the operation of the UE 3. The operation shown in Fig. 14 can be combined with one or any combination of the operations shown in Figs. 12 to 14. In step 1501, the UE 3 receives information from the MN 1 or SN 2 indicating whether one or both of a configured downlink assignment and a configured uplink grant Type 2 needs to be kept for the PSCell only or for all cells in the SCG. In other words, the network (SN 2 or MN 1) decides whether one or both of the configured downlink assignment and configured uplink grant Type 2 needs to be maintained for the PSCell only or for all cells in the SCG, and sends information indicating this decision to the UE 3. The SN 2 may send this information to the UE 3 via the MN 1. This information may be sent via an MN RRC Reconfiguration message, an SN RRC Reconfiguration message, or an MCG MAC CE to the UE 3. In step 1502, the UE 3 retains one or both of the configured downlink assignment and configured uplink grant Type 2 while the SCG is deactivated according to the information received in step 1501. According to the operation of Fig. 15, the SN 2 or MN 1 can provide the UE 3 with a decision as to whether or not the UE 3 is required to maintain one or both of the configured downlink assignment and configured uplink grant Type 2 associated with one or more SCells in the SCG while the SCG is activated.

Fig. 16 shows an example of the operation of the UE 3. The operation shown in Fig. 16 can be combined with one or any combination of the operations shown in Figs. 12 to 15. In step 1601, the UE 3 deactivates an SCG which has been configured with one or more radio bearers that use radio resources of the SCG. The radio bearer(s) includes one or any combination of an MN terminated SCG bearer(s), SN terminated SCG bearer(s), MN terminated split bearer(s), and SN terminated split bearer(s).

In step 1602, if the RRC layer requests PDCP re-establishment of the radio bearer(s) while the SCG is deactivated, the UE 3 performs an operation for the PDCP re-establishment in a user plane protocol layer of the MCG for the radio bearer(s) and does not perform an operation for the PDCP re-establishment in a user plane protocol layer of the SCG for the radio bearer(s). For example, the user plane protocol layer of the MCG performs PDCP re-establishment for MN terminated SCG bearers and MN terminated split bearers, MCG RLC re-establishment for split bearers, and MCG MAC reset for split bearers. In contrast, the user plane protocol layer of the SCG does not perform any corresponding actions, for example PDCP re-establishment for SN terminated SCG bearers and SN terminated split bearers, SCG RLC re-establishment for SCG bearers and split bearers, and SCG MAC reset for SCG bearers and split bearers. This helps to avoid unnecessary operations and thus can contribute to simplification in the maintenance of the SCG by the UE 3 while the SCG is deactivated.

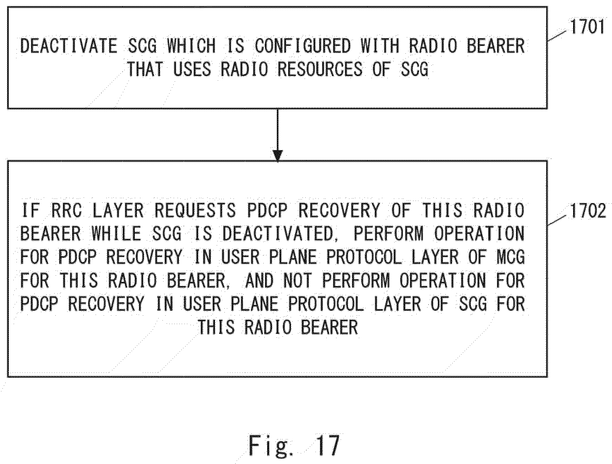

Fig. 17 shows an example of the operation of the UE 3. The operation shown in Fig. 17 can be combined with one or any combination of the operations shown in Figs. 12 to 16. In step 1701, the UE 3 deactivates an SCG which has been configured with one or more radio bearers that use radio resources of the SCG. The radio bearer(s) includes one or any combination of an MN terminated SCG bearer(s), SN terminated SCG bearer(s), MN terminated split bearer(s), and SN terminated split bearer(s).

In step 1702, if the RRC layer requests PDCP recovery of the radio bearer(s) while the SCG is deactivated, the UE 3 performs an operation for the PDCP recovery in a user plane protocol layer of the MCG for the radio bearer(s) and does not perform an operation for the PDCP recovery in a user plane protocol layer of the SCG for the radio bearer(s). For example, the user plane protocol layer of the MCG performs PDCP recovery for MN terminated SCG bearers and MN terminated split bearers, MCG RLC re-establishment for split bearers, and MCG MAC reset for split bearers. In contrast, the user plane protocol layer of the SCG does not perform any corresponding actions, for example PDCP recovery for SN terminated SCG bearers and SN terminated split bearers, SCG RLC re-establishment for SCG bearers and split bearers, and SCG MAC reset for SCG bearers and split bearers. This helps to avoid unnecessary operations and thus can contribute to simplification in the maintenance of the SCG by the UE 3 while the SCG is deactivated.

When PSCell mobility is performed while the SCG is deactivated, the UE 3 in this embodiment may maintain one or both of a configured downlink assignment and configured uplink grant Type 2 that are associated with the PSCell. Similarly, the UE 3 may maintain one or both of an SRS resource configuration and PUCCH resource configuration associated with the PSCell when PSCell mobility is performed while the SCG is deactivated. The PSCell mobility may be an intra-SN PSCell change, an inter-SN PSCell change, a PSCell reconfiguration, or an SCG reconfiguration due to a handover (MN change).

### Third Embodiment

The example configuration of a radio communication network according to this embodiment is similar to the examples shown in Figs. 1 and 2. The UE 3 in this embodiment may keep a Time Alignment Timer (TAT) associated with an SCG running while the SCG is deactivated, and may perform random accesses to the PSCell upon expiration of the TAT while the SCG is deactivated. The UE 3 may receive a Time Advance (TA) command from the PSCell during this random access, restart the Time Alignment Timer (TAT), and keep the TAT running while the SCG is deactivated. This can contribute to allowing the UE 3 to omit random access and use the SCG in a timely manner when the SCG is activated in the future.

### Fourth Embodiment

The example configuration of a radio communication network according to this embodiment is similar to the examples shown in Figs. 1 and 2. While an SCG in which a split bearer has been configured is deactivated, the UE 3 and the network (i.e., MN 1 or SN 2) may set the uplink (RLC) primary path of the split bearer to the MCG without using the SCG part (or SCG leg) of the split bearer. Then, when the SCG configured with the split bearer is activated, the UE 3 and the network may set the uplink primary path of the split bearer to the SCG. The UE 3 may autonomously change the uplink primary path of the split bearer to the SCG in response to the SCG activation. Additionally or alternatively, the network (i.e., MN 1 or SN 2) may indicate to the UE 3, when activating or pre-configuring the SCG, that the uplink primary path of the split bearer will be changed to the SCG upon SCG activation.

### Other Embodiments

In the first embodiment, when an SCG is deactivated in PSCell addition or PSCell mobility, the UE 3 performs random access to the PSCell in response to the PSCell addition or PSCell mobility without waiting until a future SCG activation. In the third embodiment, the UE 3 performs random access to the PSCell in response to expiration of a TAT while the SCG is deactivated. These embodiments may be modified as follows. Even if the UE 3 maintains valid uplink synchronization (or uplink timing) of the SCG by one of these random accesses, it may start with random access in the PSCell if the serving beam at the time of activating the SCG (the optimal beam or the beam specified by the SN 2) is different from the serving beam at the time the uplink synchronization has been established.

In the above embodiments, SCG deactivation may be referred to as SCG suspend or SCG suspension. The state of the SCG cells (PSCell only, or PSCell and SCells) while the SCG is deactivated may be referred to as deactivated state or dormancy state. Furthermore, the dormancy state may be equivalent or similar to the dormant state of an LTE SCell, or correspond to the dormant BWP in 5G NR.

In the above embodiments, if an SCG activation instruction (or indication) is sent to the UE 3 via physical layer signaling (e.g., DCI on PDCCH) or MAC layer signaling (e.g., MAC CE), the MAC layer or physical layer of the UE 3 may indicate the SCG activation to the RRC layer of the UE 3.

In the above embodiments, in the case where an SCG activation instruction (or indication) is made by the SN 2 (SCG) via the MN 1 (MCG), the DU 22 (e.g., gNB-DU) of the SN 2 initiates or triggers the transmission of the SCG activation instruction (or indication) and informs (or requests) the CU 21 (e.g., gNB-CU) of the SN 2 to do so.

In the embodiments described above, SCG deactivation may be initiated by the MN 1 or SN 2. On the other hand, SCG activation may be initiated by the MN 1 or SN 2, or by the UE 3. If the UE 3 initiates it, the UE 3 may send an activation request in the MCG (or SCG) using a PUCCH (e.g., Scheduling Request (SR)), SRS, or RACH.

In the embodiments described above, the MN 1 may decide on SCG activation, or the SN 2 may decide on this. Alternatively, the SN 2 may make a request to the MN 1 for SCG activation, and the MN 1 may decide to activate the SCG or not in response to the request. Similarly, the MN 1 may decide on SCG deactivation, or the SN 2 may decide on this. Alternatively, the SN 2 may make a request to the MN 1 for SCG deactivation, and the MN 1 may decide whether to deactivate the SCG or not in response to the request.

In the above embodiment, if the UE 3 receives an SCG activation instruction (or indication) from the MN 1 (or from the SN 2 via the MN 1) and performs a random access in the PSCell but fails (i.e., SCG activation failed), then the UE 3 may report this in an RRC message (e.g., SCG Failure Information) to the MN 1. The failure type contained in the SCG Failure Information message may be SCG reconfiguration failure, SCG activation failure, or some other new value. In response to the receipt of the RRC message, the MN 1 may notify the SN 2 of the SCG activation failure with an X2AP (or XnAP) IE (e.g., SCG Reconfiguration Failure, SCG Modification Failure), or with a Cause value (e.g., SCG activation failure, failed SCG activation) in an X2AP (or XnAP) message to the SN 2.

In the above embodiments, the UE 3 may stay (or camp) on the initial BWP, first active BWP, or dormant BWP specified by the SN 2 while the SCG is deactivated, and perform any necessary RRM measurements therein.

In the above embodiments, when the MN 1 or SN 2 activates the SCG, the MN 1 or SN 2 may instruct the UE 3 to activate only the PSCell, all cells belonging to the SCG (i.e., PSCells and all SCells), or the PSCell and one or more selected SCells. When the MN 1 or SN 2 activates the SCG, the MN 1 or SN 2 may instruct the UE 3 to change (or switch) directly to the dormant BWP upon activation of the SCell.

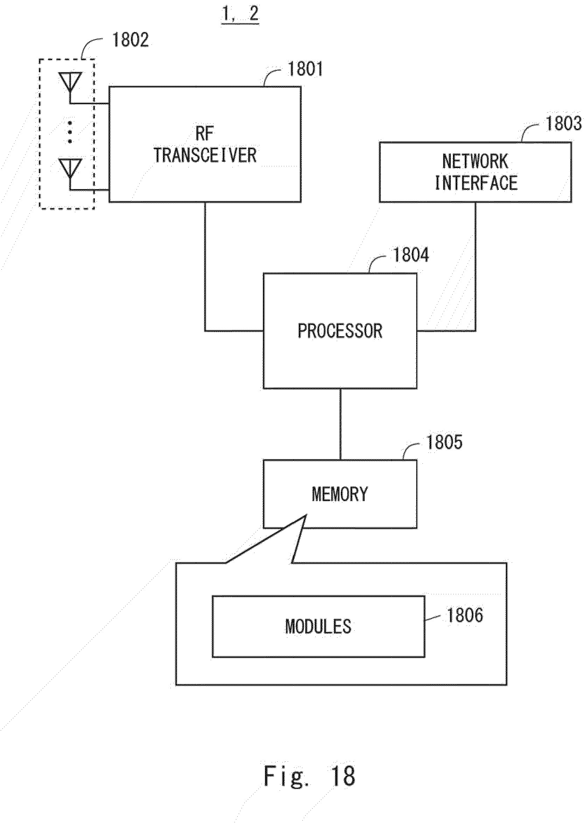

The following provides configuration examples of the MN 1, the SN 2, and the UE 3 according to the embodiments. Fig. 18 is a block diagram showing a configuration example of the MN 1 according to the above-described embodiments. The configuration of the SN 2 may be the same as that shown in Fig. 18. Referring to Fig. 18, the MN 1 includes a Radio Frequency transceiver 1801, a network interface 1803, a processor 1804, and a memory 1805. The RF transceiver 1801 performs analog RF signal processing to communicate with UEs including the UE 3. The RF transceiver 1801 may include a plurality of transceivers. The RF transceiver 1801 is coupled to an antenna array 1802 and the processor 1804. The RF transceiver 1801 receives modulation symbol data from the processor 1804, generates a transmission RF signal, and supplies the transmission RF signal to the antenna array 1802. The RF transceiver 1801 generates a baseband reception signal based on a reception RF signal received by the antenna array 1802 and supplies the baseband reception signal to the processor 1804. The RF transceiver 1801 may include an analog beamformer circuit for beamforming. The analog beamformer circuit includes, for example, a plurality of phase shifters and a plurality of power amplifiers.

The network interface 1803 is used to communicate with network nodes (e.g., MN 1, and control node and transfer node of a core network). The network interface 1803 may include, for example, a Network Interface Card (NIC) that is compliant with IEEE 802.3 series.

The processor 1804 performs digital baseband signal processing (data-plane processing) and control-plane processing for radio communication. The processor 1804 may include a plurality of processors. For example, the processor 1804 may include a modem processor (e.g., Digital Signal Processor (DSP)) for performing the digital baseband signal processing and a protocol stack processor (e.g., Central Processing Unit (CPU) or Micro Processing Unit (MPU)) for performing the control-plane processing. The processor 1804 may include a digital beamformer module for beamforming. The digital beamformer module may include a Multiple Input Multiple Output (MIMO) encoder and precoder.

The memory 1805 is composed of a combination of a volatile memory and a non-volatile memory. The volatile memory is, for example, a Static Random Access Memory (SRAM), a Dynamic RAM (DRAM), or a combination thereof. The non-volatile memory may be a Mask Read Only Memory (MROM), an Electrically Erasable Programmable ROM (EEPROM), a flash memory, or a hard disk drive, or any combination thereof. The memory 1805 may include a storage located away from the processor 1804. In this case, the processor 1804 may access the memory 1805 via the network interface 1803 or an I/O interface not shown.

The memory 1805 may store one or more software modules (computer programs) 1806 including instructions and data for performing processing by the MN 1 described in the above embodiments. In some implementations, the processor 1804 may be configured to load and execute the software module(s) 1806 from the memory 1805, thereby performing the processing of the MN 1 described in the above embodiments.

When the MN 1 is a CU (e.g., eNB-CU or gNB-CU) or a CU-CP, the MN 1 does not have to the RF transceiver 1801 (and the antenna array 1802).

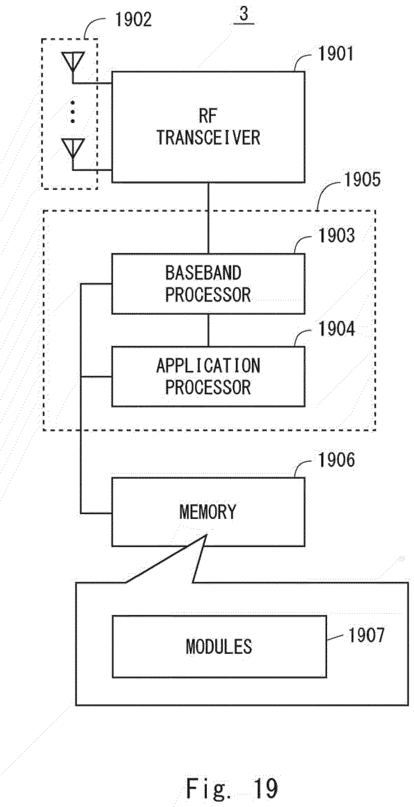

Fig. 19 is a block diagram showing a configuration example of the UE 3. The radio frequency (RF) transceiver 1901 performs analog RF signal processing to communicate with the MN 1 and the SN 2. The RF transceiver 1901 may include a plurality of transceivers. The analog RF signal processing performed by the RF transceiver 1901 includes frequency up-conversion, frequency down-conversion, and amplification. The RF transceiver 1901 is coupled to the antenna array 1902 and the baseband processor 1903. The RF transceiver 1901 receives modulation symbol data (or OFDM symbol data) from the baseband processor 1903, generates a transmission RF signal, and supplies the transmission RF signal to the antenna array 1902. The RF transceiver 1901 generates a baseband reception signal based on the reception RF signal received by the antenna array 1902 and supplies the baseband reception signal to the baseband processor 1903. The RF transceiver 1901 may include an analog beamformer circuit for beamforming. The analog beamformer circuit includes, for example, a plurality of phase shifters and a plurality of power amplifiers.

The baseband processor 1903 performs digital baseband signal processing (data-plane processing) and control-plane processing for wireless communication. The digital baseband signal processing includes (a) data compression/decompression, (b) data segmentation/concatenation, (c) transmission format (transmission frame) composition/decomposition, (d) channel encoding/decoding, (e) modulation (i.e., symbol mapping)/demodulation, and (f) Inverse Fast Fourier Transform (IFFT) generation of OFDM symbol data (baseband OFDM signal). On the other hand, the control-plane processing includes communication management of the layer 1 (e.g., transmission power control), the layer 2 (e.g., radio resource management, and hybrid automatic repeat request (HARQ) processing), and the layer 3 (e.g., signaling regarding attachment, mobility, and call management).

For example, the digital baseband signal processing by the baseband processor 1903 may include signal processing in the Service Data Adaptation Protocol (SDAP) layer, Packet Data Convergence Protocol (PDCP) layer, Radio Link Control (RLC) layer, MAC layer, and PHY layer. The control-plane processing performed by the baseband processor 11903 may also include processing of Non-Access Stratum (NAS) protocols, RRC protocols, and MAC CEs.

The baseband processor 1903 may perform MIMO encoding and precoding for beamforming.

The baseband processor 1903 may include a modem processor (e.g., DSP) which performs the digital baseband signal processing and a protocol stack processor (e.g., CPU or MPU) which performs the control-plane processing. In this case, the protocol stack processor which performs the control-plane processing may be integrated with an application processor 1904 described later.

The application processor 1904 may also be referred to as a CPU, an MPU, a microprocessor, or a processor core. The application processor 1904 may include a plurality of processors (processor cores). The application processor 1904 loads a system software program (Operating System (OS)) and various application programs (e.g., a voice call application, a WEB browser, a mailer, a camera operation application, a music player application) from a memory 1906 or from another memory (not shown) and executes these programs, thereby providing various functions of the UE 3.

In some implementations, as represented by the dashed line (1905) in Fig. 19, the baseband processor 1903 and the application processor 1904 may be integrated on a single chip. In other words, the baseband processor 1903 and the application processor 1904 may be implemented in a single System on Chip (SoC) device 1905. A SoC device may be referred to as a system Large Scale Integration (LSI) or a chipset.

The memory 1906 is a volatile memory or a non-volatile memory or a combination thereof. The memory 1906 may include a plurality of physically independent memory devices. The volatile memory is, for example, SRAM, DRAM, or a combination thereof. The non-volatile memory may be MROM, an EEPROM, a flash memory, a hard disk drive, or any combination thereof. The memory 1906 may include, for example, an external memory device that can be accessed from the baseband processor 1903, the application processor 1904, or the SoC 1905. The memory 1906 may include an internal memory device integrated within the baseband processor 1903, the application processor 1904, or the SoC 1905. Further, the memory 1906 may include a memory in a Universal Integrated Circuit Card (UICC).

The memory 1906 may store one or more software modules (computer programs) 1907 including instructions and data for processing by the UE 3 described in the above embodiments. In some implementations, the baseband processor 1903 or the application processor 1904 may load the software module(s) 1907 from the memory 1906 and execute the loaded software module(s) 1907, thereby performing the processing of the UE 3 described in the above embodiments with reference to the drawings.

The control-plane processing and operations performed by the UE 3 described in the above embodiments can be achieved by elements other than the RF transceiver 1901 and the antenna array 1902, i.e., achieved by the memory 1906, which stores the software modules 1907, and one or both of the baseband processor 1903 and the application processor 1904.

As described using Figs. 18 and 19, each of the processors in the MN 1, SN 2, and UE 3 according to the embodiments described above executes one or more programs, containing a set of instructions, to cause a computer to perform an algorithm described with reference to the drawings. These programs can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magnetooptical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). These programs may be provided to a computer using any type of transitory computer readable media. Examples of transitory computer readable media include electric signals, optical signals, and electromagnetic waves. Transitory computer readable media can provide the programs to a computer via a wired communication line (e.g., electric wires, and optical fibers) or a wireless communication line.

The above-described embodiments are merely examples of applications of the technical ideas obtained by the inventors. These technical ideas are not limited to the above-described embodiments and various modifications can be made thereto.

The whole or part of the embodiments disclosed above can be described as, but not limited to, the following supplementary notes.

### (Supplementary Note 1)

A User Equipment (UE) configured to support dual connectivity using a Master Cell Group (MCG) associated with a master node and a Secondary Cell Group (SCG) associated with a secondary node, the UE comprising:
at least one memory; and
at least one processor coupled to the memory and configured to:
   keep one or both of a configured downlink assignment associated with a Primary SCG Cell (PSCell) included in the SCG and a configured uplink grant Type 2 associated with the PSCell while the SCG configured with a radio bearer that uses radio resources of the SCG is deactivated.

### (Supplementary Note 2)

The UE according to Supplementary Note 1, wherein the at least one processor is further configured to, if a Radio Resource Control (RRC) layer requests Packet Data Convergence Protocol (PDCP) re-establishment of the radio bearer while the SCG is deactivated, perform an operation for the PDCP re-establishment in a user plane protocol layer of the MCG for the radio bearer and not to perform an operation for the PDCP re-establishment in a user plane protocol layer of the SCG for the radio bearer.

### (Supplementary Note 3)

The UE according to Supplementary Note 1 or 2, wherein the at least one processor is further configured to, if a Radio Resource Control (RRC) layer requests Packet Data Convergence Protocol (PDCP) recovery of the radio bearer while the SCG is deactivated, perform an operation for the PDCP recovery in a user plane protocol layer of the MCG for the radio bearer and not to perform an operation for the PDCP recovery in a user plane protocol layer of the SCG for the radio bearer.

### (Supplementary Note 4)

The UE according to any one of Supplementary Notes 1 to 3, wherein the at least one processor is further configured to keep one or both of the configured downlink assignment and the configured uplink grant Type 2 even if the UE has not maintained valid uplink timing for the SCG.

### (Supplementary Note 5)

The UE according to any one of Supplementary Notes 1 to 4, wherein the at least one processor is further configured to keep one or both of a configuration of configured Sounding Reference Signal (SRS) resources associated with the PSCell and a configuration of Physical Uplink Control Channel (PUCCH) resources associated with the PSCell, even if the UE has not maintained valid uplink timing for the SCG.

### (Supplementary Note 6)

The UE according to any one of Supplementary Notes 1 to 3, wherein the at least one processor is further configured to keep one or both of the configured downlink assignment and the configured uplink grant Type 2, even if a Time Alignment Timer for the PSCell expires while the SCG is deactivated.

### (Supplementary Note 7)

The UE according to any one of Supplementary Notes 1 to 3 and 6, wherein the at least one processor is further configured to keep one or both of a configuration of configured Sounding Reference Signal (SRS) resources associated with the PSCell and a configuration of Physical Uplink Control Channel (PUCCH) resources associated with the PSCell, even if a Time Alignment Timer for the PSCell expires while the SCG is deactivated.

### (Supplementary Note 8)

The UE according to any one of Supplementary Notes 1 to 7, wherein the at least one processor is further configured to keep one or both of a configured downlink assignment associated with one or more SCells included in the SCG and a configured uplink grant Type 2 associated with the one or more SCells while the SCG is deactivated.

### (Supplementary Note 9)

The UE according to any one of Supplementary Notes 1 to 8, wherein the at least one processor is configured to receive information from the master node or the secondary node indicating whether one or both of the configured downlink assignment and the configured uplink grant Type 2 need to be kept for the PSCell only or for all cells in the SCG.

### (Supplementary Note 10)

The UE according to any one of Supplementary Notes 1 to 9, wherein the at least one processor is configured to activate one or both of the kept configured downlink assignment and configured uplink grant Type 2 associated with the PSCell when the SCG is activated.

### (Supplementary Note 11)

The UE according to any one of Supplementary Notes 1 to 10, wherein the at least one processor is configured to, while the SCG is deactivated, not use an SCG part of a split bearer and set an uplink primary path of the split bearer to the MCG.

### (Supplementary Note 12)

The UE according to any one of Supplementary Notes 1 to 11, wherein the at least one processor is configured to ignore one or both of the configured downlink assignment and configured uplink grant Type 2 associated with said PSCell while the SCG is deactivated.

### (Supplementary Note 13)

The UE according to any one of Supplementary Notes 1 to 12, wherein the at least one processor is configured to, when a PSCell mobility is performed while the SCG is deactivated, keep one or both of the configured downlink assignment and configured uplink grant Type 2 associated with the PSCell.

### (Supplementary Note 14)

The UE according to any one of Supplementary Notes 1 to 13, wherein the radio bearer includes at least one of an SCG bearer terminated by the master node, an SCG bearer terminated by the secondary node, a split bearer terminated by the master node, or a split bearer terminated by the secondary node.

### (Supplementary Note 15)

A radio access network (RAN) node configured to act as a master node associated with a Master Cell Group (MCG) or a secondary node associated with a Secondary Cell Group (SCG) in dual connectivity for a User Equipment (UE), the RAN node comprising:
at least one memory; and
at least one processor coupled to the memory and configured to:
   keep one or both of a configured downlink assignment associated with a Primary SCG Cell (PSCell) included in the SCG and a configured uplink grant Type 2 associated with the PSCell while the SCG configured with a radio bearer that uses radio resources of the SCG is deactivated.

### (Supplementary Note 16)

The RAN node according to Supplementary Note 15, wherein the at least one processor is further configured to keep one or both of the configured downlink assignment and the configured uplink grant Type 2 even if the UE has not maintained valid uplink timing for the SCG.

### (Supplementary Note 17)

The RAN node according to Supplementary Note 15 or 16, wherein the at least one processor is further configured to keep one or both of a configuration of configured Sounding Reference Signal (SRS) resources associated with the PSCell and a configuration of Physical Uplink Control Channel (PUCCH) resources associated with the PSCell, even if the UE has not maintained valid uplink timing for the SCG.

### (Supplementary Note 18)

The RAN node according to any one of Supplementary Notes 15 to 17, wherein the at least one processor is further configured to keep one or both of a configured downlink assignment associated with one or more SCells included in the SCG and a configured uplink grant Type 2 associated with the one or more SCells while the SCG is deactivated.

### (Supplementary Note 19)

The RAN node according to any one of Supplementary Notes 15 to 18, wherein the at least one processor is configured to send information to the UE indicating whether one or both of the configured downlink assignment and the configured uplink grant Type 2 need to be kept for the PSCell only or for all cells in the SCG.

### (Supplementary Note 20)

A method performed by a User Equipment (UE) configured to support dual connectivity using a Master Cell Group (MCG) associated with a master node and a Secondary Cell Group (SCG) associated with a secondary node, the method comprising:
keeping one or both of a configured downlink assignment associated with a Primary SCG Cell (PSCell) included in the SCG and a configured uplink grant Type 2 associated with the PSCell while the SCG configured with a radio bearer that uses radio resources of the SCG is deactivated.

### (Supplementary Note 21)

A method performed by a radio access network (RAN) node configured to act as a master node associated with a Master Cell Group (MCG) or a secondary node associated with a Secondary Cell Group (SCG) in dual connectivity for a User Equipment (UE), the method comprising:
keeping one or both of a configured downlink assignment associated with a Primary SCG Cell (PSCell) included in the SCG and a configured uplink grant Type 2 associated with the PSCell while the SCG configured with a radio bearer that uses radio resources of the SCG is deactivated.

### (Supplementary Note 22)

A program that, when executed by a computer implemented in a User Equipment (UE) configured to support dual connectivity with a Master Cell Group (MCG) associated with a master node and a Secondary Cell Group (SCG) associated with a secondary node, causes the computer to perform a method, wherein
the method comprises keeping one or both of a configured downlink assignment associated with a Primary SCG Cell (PSCell) included in the SCG and a configured uplink grant Type 2 associated with the PSCell while the SCG configured with a radio bearer that uses radio resources of the SCG is deactivated.

### (Supplementary Note 23)

A program that, when executed by a computer implemented in a radio access network (RAN) node configured to act as a master node associated with a Master Cell Group (MCG) or a secondary node associated with a Secondary Cell Group (SCG) in dual connectivity for a User Equipment (UE), causes the computer to perform a method, wherein
the method comprises keeping one or both of a configured downlink assignment associated with a Primary SCG Cell (PSCell) included in the SCG and a configured uplink grant Type 2 associated with the PSCell while the SCG configured with a radio bearer that uses radio resources of the SCG is deactivated.

### (Supplementary Note A1)

A User Equipment (UE) configured to support dual connectivity using a Master Cell Group (MCG) associated with a master node and a Secondary Cell Group (SCG) associated with a secondary node, the UE comprising:
at least one memory; and
at least one processor coupled to the memory and configured to:
   when the SCG containing a Primary SCG Cell (PSCell) is deactivated upon a PSCell addition or a PSCell mobility, perform random access to the PSCell in response to the PSCell addition or the PSCell mobility without waiting until a future SCG activation.

### (Supplementary Note A2)

The UE according to Supplementary Note 1, wherein the at least one processor is configured to receive, in a procedure for the PSCell addition or PSCell mobility, information from the master node or the secondary node indicating whether random access to the PSCell needs to be performed in response to the PSCell addition or PSCell mobility without waiting until a future SCG activation.

### (Supplementary Note A3)

The UE according to Supplementary Note 2, wherein the information comprises a random access channel configuration of the PSCell contained in an RRC Reconfiguration message of the secondary node.

### (Supplementary Note A4)

The UE according to Supplementary Note 3, wherein the random access channel configuration indicates to the UE that random access to the PSCell needs to be performed in response to the PSCell addition or PSCell mobility without waiting until a future SCG activation, by including a configuration of a contention-free random access (CFRA) resource.

### (Supplementary Note A5)

The UE according to Supplementary Note 2, wherein the information comprises a flag contained in any of an RRC Reconfiguration message of the master node, an RRC Reconfiguration message of the secondary node, and a Medium Access Control (MAC) Control Element (CE) of the MCG.

### (Supplementary Note A6)

The UE according to Supplementary Note 1, wherein the PSCell addition or PSCell mobility instructs the UE to deactivate the SCG and causes the UE to configure or update an Access Stratum (AS) security key for a radio bearer that uses radio resources of the SCG.

### (Supplementary Note A7)

The UE according to Supplementary Note 1, wherein the at least one processor is configured to, if the PSCell addition or PSCell mobility instructs the UE to deactivate the SCG and causes the UE to configure or update an Access Stratum (AS) security key for a radio bearer that uses radio resources of the SCG, perform random access to the PSCell in response to the PSCell addition or the PSCell mobility without waiting until a future SCG activation.

### (Supplementary Note A8)

The UE according to any one of Supplementary Notes 1 to 7, wherein the PSCell mobility includes an SCG reconfiguration following a change of the master node, a PSCell modification, or a PSCell reconfiguration.

### (Supplementary Note A9)

The UE according to any one of Supplementary Notes 1 to 8, wherein the deactivation of the SCG upon the PSCell mobility includes maintaining the SCG in a deactivated state upon the PSCell mobility while the SCG is deactivated.

### (Supplementary Note A10)

The UE according to any one of Supplementary Notes 1 to 9, wherein the at least one processor is configured to autonomously deactivate the SCG after the random access to the PSCell is successfully completed.

### (Supplementary Note A11)

The UE according to any one of Supplementary Notes 1 to 9, wherein the at least one processor is configured to deactivate the SCG in response to receiving an indication of SCG deactivation from the secondary node or the master node after the random access to the PSCell is successfully completed.

### (Supplementary Note A12)

The UE according to any one of Supplementary Notes 1 to 11, wherein the at least one processor is configured to receive information from the master node or the secondary node indicating whether or not autonomous deactivation of the SCG needs to be performed after successful completion of the random access to the PSCell.

### (Supplementary Note A13)

The UE according to any one of Supplementary Notes 1 to 12, wherein the at least one processor is further configured to perform random access to the PSCell when an Access Stratum (AS) security key for a radio bearer using radio resources of the SCG needs to be updated, regardless of whether a Time Alignment Timer associated with the SCG is operating or has expired.

### (Supplementary Note A14)

The UE according to any one of Supplementary Notes 1 to 13, wherein the at least one processor is configured to keep one or both of a configured downlink assignment associated with the PSCell and a configured uplink grant Type 2 associated with the PSCell while the SCG configured with a radio bearer that uses radio resources of the SCG is deactivated.

### (Supplementary Note A15)

The UE according to Supplementary Note 14, wherein the at least one processor is further configured to, if a Radio Resource Control (RRC) layer requests Packet Data Convergence Protocol (PDCP) re-establishment of the radio bearer while the SCG is deactivated, perform an operation for the PDCP re-establishment in a user plane protocol layer of the MCG for the radio bearer and not to perform an operation for the PDCP re-establishment in a user plane protocol layer of the SCG for the radio bearer.

### (Supplementary Note A16)

The UE according to Supplementary Note 14 or 15, wherein the at least one processor is further configured to, if a Radio Resource Control (RRC) layer requests Packet Data Convergence Protocol (PDCP) recovery of the radio bearer while the SCG is deactivated, perform an operation for the PDCP recovery in a user plane protocol layer of the MCG for the radio bearer and not to perform an operation for the PDCP recovery in a user plane protocol layer of the SCG for the radio bearer.

### (Supplementary Note A17)

The UE according to any one of Supplementary Notes 14 to 16, wherein the at least one processor is further configured to keep one or both of the configured downlink assignment and the configured uplink grant Type 2 even if the UE has not maintained valid uplink timing for the SCG.

### (Supplementary Note A18)

The UE according to any one of Supplementary Notes 14 to 17, wherein the at least one processor is further configured to keep one or both of a configuration of configured Sounding Reference Signal (SRS) resources associated with the PSCell and a configuration of Physical Uplink Control Channel (PUCCH) resources associated with the PSCell, even if the UE has not maintained valid uplink timing for the SCG.

### (Supplementary Note A19)

The UE according to any one of Supplementary Notes 14 to 16, wherein the at least one processor is further configured to keep one or both of the configured downlink assignment and the configured uplink grant Type 2, even if a Time Alignment Timer for the PSCell expires while the SCG is deactivated.

### (Supplementary Note A20)

The UE according to any one of Supplementary Notes 14 to 17 and 19, wherein the at least one processor is further configured to keep one or both of a configuration of configured Sounding Reference Signal (SRS) resources associated with the PSCell and a configuration of Physical Uplink Control Channel (PUCCH) resources associated with the PSCell, even if a Time Alignment Timer for the PSCell expires while the SCG is deactivated.

### (Supplementary Note A21)

The UE according to any one of Supplementary Notes 14 to 20, wherein the at least one processor is further configured to keep one or both of a configured downlink assignment associated with one or more SCells included in the SCG and a configured uplink grant Type 2 associated with the one or more SCells while the SCG is deactivated.

### (Supplementary Note A22)

The UE according to any one of Supplementary Notes 14 to 21, wherein the at least one processor is configured to receive information from the master node or the secondary node indicating whether one or both of the configured downlink assignment and the configured uplink grant Type 2 need to be kept for the PSCell only or for all cells in the SCG.

### (Supplementary Note A23)

A radio access network (RAN) node configured to act as a master node associated with a Master Cell Group (MCG) or a secondary node associated with a Secondary Cell Group (SCG) in dual connectivity for a User Equipment (UE), the RAN node comprising:
at least one memory; and
at least one processor coupled to the memory and configured to:
   when the SCG containing a Primary SCG Cell (PSCell) is deactivated upon PSCell addition or PSCell mobility, indicate to the UE whether or not the UE is required to perform random access to the PSCell without waiting until a future SCG activation.

### (Supplementary Note A24)

The RAN node according to Supplementary Note 23, wherein the at least one processor is configured to use a random access channel configuration of the PSCell contained in an RRC Reconfiguration message of the secondary node, in order to indicate to the UE whether or not the UE is required to perform random access to the PSCell in response to the PSCell addition or PSCell mobility without waiting until a future SCG activation.

### (Supplementary Note A25)

The RAN node according to Supplementary Note 24, wherein the at least one processor is configured to include a configuration of a contention-free random access (CFRA) resource into the random access channel configuration, thereby indicating to the UE that random access to the PSCell needs to be performed upon the PSCell addition or PSCell mobility without waiting until a future SCG activation.

### (Supplementary Note A26)

The RAN node according to Supplementary Note 23, wherein the at least one processor is configured to use a flag contained in any of an RRC Reconfiguration message of the master node, an RRC Reconfiguration message of the secondary node, and a Medium Access Control (MAC) Control Element (CE) of the MCG, in order to indicate to the UE whether or not the UE is required to perform random access to the PSCell in response to the PSCell addition or PSCell mobility without waiting until a future SCG activation.

### (Supplementary Note A27)

The RAN node according to any one of Supplementary Notes 23 to 26, wherein the at least one processor is configured to, if the PSCell addition or PSCell mobility instructs the UE to deactivate the SCG and causes the UE to configure or update an Access Stratum (AS) security key for a radio bearer that uses radio resources of the SCG, indicate to the UE that the UE is required to perform random access to the PSCell in response to the PSCell addition or the PSCell mobility without waiting until a future SCG activation.

### (Supplementary Note A28)

The RAN node according to any one of Supplementary Notes 23 to 27, wherein the at least one processor is configured to autonomously deactivate the SCG after successful completion of the random access to the PSCell.

### (Supplementary Note A29)

The RAN node according to any one of Supplementary Notes 23 to 27, wherein the at least one processor is configured to send an indication of SCG deactivation to the UE after successful completion of the random access to the PSCell.

### (Supplementary Note A30)

The RAN node according to any one of Supplementary Notes 23 to 29, wherein the at least one processor is configured to indicate to the UE whether or not the UE is required to autonomously deactivate the SCG after the random access to the PSCell is successfully completed.

### (Supplementary Note A31)

The RAN node according to any one of Supplementary Notes 23 to 30, wherein the at least one processor is configured to keep one or both of a configured downlink assignment associated with the PSCell and a configured uplink grant Type 2 associated with the PSCell while the SCG configured with a radio bearer that uses radio resources of the SCG is deactivated.

### (Supplementary Note A32)

The RAN node according to Supplementary Note 31, wherein the at least one processor is further configured to keep one or both of the configured downlink assignment and the configured uplink grant Type 2 even if the UE has not maintained valid uplink timing for the SCG.

### (Supplementary Note A33)

The RAN node according to Supplementary Note 31 or 32, wherein the at least one processor is further configured to keep one or both of a configuration of configured Sounding Reference Signal (SRS) resources associated with the PSCell and a configuration of Physical Uplink Control Channel (PUCCH) resources associated with the PSCell, even if the UE has not maintained valid uplink timing for the SCG.

### (Supplementary Note A34)

The RAN node according to any one of Supplementary Notes 31 to 33, wherein the at least one processor is further configured to keep one or both of a configured downlink assignment associated with one or more SCells included in the SCG and a configured uplink grant Type 2 associated with the one or more SCells while the SCG is deactivated.

### (Supplementary Note A35)

The RAN node according to any one of Supplementary Notes 31 to 34, wherein the at least one processor is configured to send information to the UE indicating whether one or both of the configured downlink assignment and the configured uplink grant Type 2 need to be kept for the PSCell only or for all cells in the SCG.

### (Supplementary Note A36)

A method performed by a User Equipment (UE) configured to support dual connectivity using a Master Cell Group (MCG) associated with a master node and a Secondary Cell Group (SCG) associated with a secondary node, the method comprising:
when the SCG containing a Primary SCG Cell (PSCell) is deactivated upon a PSCell addition or a PSCell mobility, performing random access to the PSCell in response to the PSCell addition or the PSCell mobility without waiting until a future SCG activation.

### (Supplementary Note A37)

A method performed by a radio access network (RAN) node configured to act as a master node associated with a Master Cell Group (MCG) or a secondary node associated with a Secondary Cell Group (SCG) in dual connectivity for a User Equipment (UE), the method comprising:
when the SCG containing a Primary SCG Cell (PSCell) is deactivated upon PSCell addition or PSCell mobility, indicating to the UE whether or not the UE is required to perform random access to the PSCell without waiting until a future SCG activation.

### (Supplementary Note A38)

A program that, when executed by a computer implemented in a User Equipment (UE) configured to support dual connectivity with a Master Cell Group (MCG) associated with a master node and a Secondary Cell Group (SCG) associated with a secondary node, causes the computer to perform a method, wherein
the method comprises, when the SCG containing a Primary SCG Cell (PSCell) is deactivated upon a PSCell addition or a PSCell mobility, performing random access to the PSCell in response to the PSCell addition or the PSCell mobility without waiting until a future SCG activation.

### (Supplementary Note A39)

A program that, when executed by a computer implemented in a radio access network (RAN) node configured to act as a master node associated with a Master Cell Group (MCG) or a secondary node associated with a Secondary Cell Group (SCG) in dual connectivity for a User Equipment (UE), causes the computer to perform a method, wherein
the method comprises, when the SCG containing a Primary SCG Cell (PSCell) is deactivated upon PSCell addition or PSCell mobility, indicating to the UE whether or not the UE is required to perform random access to the PSCell without waiting until a future SCG activation.

This application is based upon and claims the benefit of priority from Japanese Patent Application No. 2020-213547, filed on December 23, 2020, the disclosure of which is incorporated herein in its entirety by reference.

### Reference Signs List

- 1: Master Node (MN)
- 2: Secondary Node (SN)
- 3: User Equipment (UE)
- 1804: Processor
- 1805: Memory
- 1806: Modules
- 1903: Baseband Processor
- 1904: Application Processor
- 1906: Memory
- 1907: Modules

## Claims

1. A User Equipment (UE) configured to support dual connectivity using a Master Cell Group (MCG) associated with a master node and a Secondary Cell Group (SCG) associated with a secondary node, the UE comprising:
at least one memory; and
at least one processor coupled to the memory and configured to:
when the SCG containing a Primary SCG Cell (PSCell) is deactivated upon a PSCell addition or a PSCell mobility, perform random access to the PSCell in response to the PSCell addition or the PSCell mobility without waiting until a future SCG activation.

2. The UE according to claim 1, wherein the at least one processor is configured to receive, in a procedure for the PSCell addition or PSCell mobility, information from the master node or the secondary node indicating whether random access to the PSCell needs to be performed in response to the PSCell addition or PSCell mobility without waiting until a future SCG activation.

3. The UE according to claim 2, wherein the information comprises a random access channel configuration of the PSCell contained in an RRC Reconfiguration message of the secondary node.

4. The UE according to claim 3, wherein the random access channel configuration indicates to the UE that random access to the PSCell needs to be performed in response to the PSCell addition or PSCell mobility without waiting until a future SCG activation, by including a configuration of a contention-free random access (CFRA) resource.

5. The UE according to claim 2, wherein the information comprises a flag contained in any of an RRC Reconfiguration message of the master node, an RRC Reconfiguration message of the secondary node, and a Medium Access Control (MAC) Control Element (CE) of the MCG.

6. The UE according to claim 1, wherein the PSCell addition or PSCell mobility instructs the UE to deactivate the SCG and causes the UE to configure or update an Access Stratum (AS) security key for a radio bearer that uses radio resources of the SCG.

7. The UE according to claim 1, wherein the at least one processor is configured to, if the PSCell addition or PSCell mobility instructs the UE to deactivate the SCG and causes the UE to configure or update an Access Stratum (AS) security key for a radio bearer that uses radio resources of the SCG, perform random access to the PSCell in response to the PSCell addition or the PSCell mobility without waiting until a future SCG activation.

8. The UE according to any one of claims 1 to 7, wherein the PSCell mobility includes an SCG reconfiguration following a change of the master node, a PSCell modification, or a PSCell reconfiguration.

9. The UE according to any one of claims 1 to 8, wherein the deactivation of the SCG upon the PSCell mobility includes maintaining the SCG in a deactivated state upon the PSCell mobility while the SCG is deactivated.

10. The UE according to any one of claims 1 to 9, wherein the at least one processor is configured to autonomously deactivate the SCG after the random access to the PSCell is successfully completed.

11. The UE according to any one of claims 1 to 9, wherein the at least one processor is configured to deactivate the SCG in response to receiving an indication of SCG deactivation from the secondary node or the master node after the random access to the PSCell is successfully completed.

12. The UE according to any one of claims 1 to 11, wherein the at least one processor is configured to receive information from the master node or the secondary node indicating whether or not autonomous deactivation of the SCG needs to be performed after successful completion of the random access to the PSCell.

13. The UE according to any one of claims 1 to 12, wherein the at least one processor is further configured to perform random access to the PSCell when an Access Stratum (AS) security key for a radio bearer using radio resources of the SCG needs to be updated, regardless of whether a Time Alignment Timer associated with the SCG is operating or has expired.

14. The UE according to any one of claims 1 to 13, wherein the at least one processor is configured to keep one or both of a configured downlink assignment associated with the PSCell and a configured uplink grant Type 2 associated with the PSCell while the SCG configured with a radio bearer that uses radio resources of the SCG is deactivated.

15. The UE according to claim 14, wherein the at least one processor is further configured to, if a Radio Resource Control (RRC) layer requests Packet Data Convergence Protocol (PDCP) re-establishment of the radio bearer while the SCG is deactivated, perform an operation for the PDCP re-establishment in a user plane protocol layer of the MCG for the radio bearer and not to perform an operation for the PDCP re-establishment in a user plane protocol layer of the SCG for the radio bearer.

16. The UE according to claim 14 or 15, wherein the at least one processor is further configured to, if a Radio Resource Control (RRC) layer requests Packet Data Convergence Protocol (PDCP) recovery of the radio bearer while the SCG is deactivated, perform an operation for the PDCP recovery in a user plane protocol layer of the MCG for the radio bearer and not to perform an operation for the PDCP recovery in a user plane protocol layer of the SCG for the radio bearer.

17. The UE according to any one of claims 14 to 16, wherein the at least one processor is further configured to keep one or both of the configured downlink assignment and the configured uplink grant Type 2 even if the UE has not maintained valid uplink timing for the SCG.

18. The UE according to any one of claims 14 to 17, wherein the at least one processor is further configured to keep one or both of a configuration of configured Sounding Reference Signal (SRS) resources associated with the PSCell and a configuration of Physical Uplink Control Channel (PUCCH) resources associated with the PSCell, even if the UE has not maintained valid uplink timing for the SCG.

19. The UE according to any one of claims 14 to 16, wherein the at least one processor is further configured to keep one or both of the configured downlink assignment and the configured uplink grant Type 2, even if a Time Alignment Timer for the PSCell expires while the SCG is deactivated.

20. The UE according to any one of claims 14 to 17 and 19, wherein the at least one processor is further configured to keep one or both of a configuration of configured Sounding Reference Signal (SRS) resources associated with the PSCell and a configuration of Physical Uplink Control Channel (PUCCH) resources associated with the PSCell, even if a Time Alignment Timer for the PSCell expires while the SCG is deactivated.

21. The UE according to any one of claims 14 to 20, wherein the at least one processor is further configured to keep one or both of a configured downlink assignment associated with one or more SCells included in the SCG and a configured uplink grant Type 2 associated with the one or more SCells while the SCG is deactivated.

22. The UE according to any one of claims 14 to 21, wherein the at least one processor is configured to receive information from the master node or the secondary node indicating whether one or both of the configured downlink assignment and the configured uplink grant Type 2 need to be kept for the PSCell only or for all cells in the SCG.

23. A radio access network (RAN) node configured to act as a master node associated with a Master Cell Group (MCG) or a secondary node associated with a Secondary Cell Group (SCG) in dual connectivity for a User Equipment (UE), the RAN node comprising:
at least one memory; and
at least one processor coupled to the memory and configured to:
when the SCG containing a Primary SCG Cell (PSCell) is deactivated upon PSCell addition or PSCell mobility, indicate to the UE whether or not the UE is required to perform random access to the PSCell without waiting until a future SCG activation.

24. The RAN node according to claim 23, wherein the at least one processor is configured to use a random access channel configuration of the PSCell contained in an RRC Reconfiguration message of the secondary node, in order to indicate to the UE whether or not the UE is required to perform random access to the PSCell in response to the PSCell addition or PSCell mobility without waiting until a future SCG activation.

25. The RAN node according to claim 24, wherein the at least one processor is configured to include a configuration of a contention-free random access (CFRA) resource into the random access channel configuration, thereby indicating to the UE that random access to the PSCell needs to be performed upon the PSCell addition or PSCell mobility without waiting until a future SCG activation.

26. The RAN node according to claim 23, wherein the at least one processor is configured to use a flag contained in any of an RRC Reconfiguration message of the master node, an RRC Reconfiguration message of the secondary node, and a Medium Access Control (MAC) Control Element (CE) of the MCG, in order to indicate to the UE whether or not the UE is required to perform random access to the PSCell in response to the PSCell addition or PSCell mobility without waiting until a future SCG activation.

27. The RAN node according to any one of claims 23 to 26, wherein the at least one processor is configured to, if the PSCell addition or PSCell mobility instructs the UE to deactivate the SCG and causes the UE to configure or update an Access Stratum (AS) security key for a radio bearer that uses radio resources of the SCG, indicate to the UE that the UE is required to perform random access to the PSCell in response to the PSCell addition or the PSCell mobility without waiting until a future SCG activation.

28. The RAN node according to any one of claims 23 to 27, wherein the at least one processor is configured to autonomously deactivate the SCG after successful completion of the random access to the PSCell.

29. The RAN node according to any one of claims 23 to 27, wherein the at least one processor is configured to send an indication of SCG deactivation to the UE after successful completion of the random access to the PSCell.

30. The RAN node according to any one of claims 23 to 29, wherein the at least one processor is configured to indicate to the UE whether or not the UE is required to autonomously deactivate the SCG after the random access to the PSCell is successfully completed.

31. The RAN node according to any one of claims 23 to 30, wherein the at least one processor is configured to keep one or both of a configured downlink assignment associated with the PSCell and a configured uplink grant Type 2 associated with the PSCell while the SCG configured with a radio bearer that uses radio resources of the SCG is deactivated.

32. The RAN node according to claim 31, wherein the at least one processor is further configured to keep one or both of the configured downlink assignment and the configured uplink grant Type 2 even if the UE has not maintained valid uplink timing for the SCG.

33. The RAN node according to claim 31 or 32, wherein the at least one processor is further configured to keep one or both of a configuration of configured Sounding Reference Signal (SRS) resources associated with the PSCell and a configuration of Physical Uplink Control Channel (PUCCH) resources associated with the PSCell, even if the UE has not maintained valid uplink timing for the SCG.

34. The RAN node according to any one of claims 31 to 33, wherein the at least one processor is further configured to keep one or both of a configured downlink assignment associated with one or more SCells included in the SCG and a configured uplink grant Type 2 associated with the one or more SCells while the SCG is deactivated.

35. The RAN node according to any one of claims 31 to 34, wherein the at least one processor is configured to send information to the UE indicating whether one or both of the configured downlink assignment and the configured uplink grant Type 2 need to be kept for the PSCell only or for all cells in the SCG.

36. A method performed by a User Equipment (UE) configured to support dual connectivity using a Master Cell Group (MCG) associated with a master node and a Secondary Cell Group (SCG) associated with a secondary node, the method comprising:
when the SCG containing a Primary SCG Cell (PSCell) is deactivated upon a PSCell addition or a PSCell mobility, performing random access to the PSCell in response to the PSCell addition or the PSCell mobility without waiting until a future SCG activation.

37. A method performed by a radio access network (RAN) node configured to act as a master node associated with a Master Cell Group (MCG) or a secondary node associated with a Secondary Cell Group (SCG) in dual connectivity for a User Equipment (UE), the method comprising:
when the SCG containing a Primary SCG Cell (PSCell) is deactivated upon PSCell addition or PSCell mobility, indicating to the UE whether or not the UE is required to perform random access to the PSCell without waiting until a future SCG activation.

38. A non-transitory computer readable medium storing a program that, when executed by a computer implemented in a User Equipment (UE) configured to support dual connectivity with a Master Cell Group (MCG) associated with a master node and a Secondary Cell Group (SCG) associated with a secondary node, causes the computer to perform a method, wherein
the method comprises, when the SCG containing a Primary SCG Cell (PSCell) is deactivated upon a PSCell addition or a PSCell mobility, performing random access to the PSCell in response to the PSCell addition or the PSCell mobility without waiting until a future SCG activation.

39. A non-transitory computer readable medium storing a program that, when executed by a computer implemented in a radio access network (RAN) node configured to act as a master node associated with a Master Cell Group (MCG) or a secondary node associated with a Secondary Cell Group (SCG) in dual connectivity for a User Equipment (UE), causes the computer to perform a method, wherein
the method comprises, when the SCG containing a Primary SCG Cell (PSCell) is deactivated upon PSCell addition or PSCell mobility, indicating to the UE whether or not the UE is required to perform random access to the PSCell without waiting until a future SCG activation.

40. A User Equipment (UE) configured to support dual connectivity using a Master Cell Group (MCG) associated with a master node and a Secondary Cell Group (SCG) associated with a secondary node, the UE comprising:
at least one memory; and
at least one processor coupled to the memory and configured to:
keep one or both of a configured downlink assignment associated with a Primary SCG Cell (PSCell) included in the SCG and a configured uplink grant Type 2 associated with the PSCell while the SCG configured with a radio bearer that uses radio resources of the SCG is deactivated.

41. The UE according to claim 40, wherein the at least one processor is further configured to, if a Radio Resource Control (RRC) layer requests Packet Data Convergence Protocol (PDCP) re-establishment of the radio bearer while the SCG is deactivated, perform an operation for the PDCP re-establishment in a user plane protocol layer of the MCG for the radio bearer and not to perform an operation for the PDCP re-establishment in a user plane protocol layer of the SCG for the radio bearer.

42. The UE according to claim 40 or 41, wherein the at least one processor is further configured to, if a Radio Resource Control (RRC) layer requests Packet Data Convergence Protocol (PDCP) recovery of the radio bearer while the SCG is deactivated, perform an operation for the PDCP recovery in a user plane protocol layer of the MCG for the radio bearer and not to perform an operation for the PDCP recovery in a user plane protocol layer of the SCG for the radio bearer.

43. The UE according to any one of claims 40 to 42, wherein the at least one processor is further configured to keep one or both of the configured downlink assignment and the configured uplink grant Type 2 even if the UE has not maintained valid uplink timing for the SCG.

44. The UE according to any one of claims 40 to 43, wherein the at least one processor is further configured to keep one or both of a configuration of configured Sounding Reference Signal (SRS) resources associated with the PSCell and a configuration of Physical Uplink Control Channel (PUCCH) resources associated with the PSCell, even if the UE has not maintained valid uplink timing for the SCG.

45. The UE according to any one of claims 40 to 42, wherein the at least one processor is further configured to keep one or both of the configured downlink assignment and the configured uplink grant Type 2, even if a Time Alignment Timer for the PSCell expires while the SCG is deactivated.

46. The UE according to any one of claims 40 to 42 and 45, wherein the at least one processor is further configured to keep one or both of a configuration of configured Sounding Reference Signal (SRS) resources associated with the PSCell and a configuration of Physical Uplink Control Channel (PUCCH) resources associated with the PSCell, even if a Time Alignment Timer for the PSCell expires while the SCG is deactivated.

47. The UE according to any one of claims 40 to 46, wherein the at least one processor is further configured to keep one or both of a configured downlink assignment associated with one or more SCells included in the SCG and a configured uplink grant Type 2 associated with the one or more SCells while the SCG is deactivated.

48. The UE according to any one of claims 40 to 47, wherein the at least one processor is configured to receive information from the master node or the secondary node indicating whether one or both of the configured downlink assignment and the configured uplink grant Type 2 need to be kept for the PSCell only or for all cells in the SCG.

49. The UE according to any one of claims 40 to 48, wherein the at least one processor is configured to activate one or both of the kept configured downlink assignment and configured uplink grant Type 2 associated with the PSCell when the SCG is activated.

50. The UE according to any one of claims 40 to 49, wherein the at least one processor is configured to, while the SCG is deactivated, not use an SCG part of a split bearer and set an uplink primary path of the split bearer to the MCG.

51. The UE according to any one of claims 40 to 50, wherein the at least one processor is configured to ignore one or both of the configured downlink assignment and configured uplink grant Type 2 associated with said PSCell while the SCG is deactivated.

52. The UE according to any one of claims 40 to 51, wherein the at least one processor is configured to, when a PSCell mobility is performed while the SCG is deactivated, keep one or both of the configured downlink assignment and configured uplink grant Type 2 associated with the PSCell.

53. The UE according to any one of claims 40 to 52, wherein the radio bearer includes at least one of an SCG bearer terminated by the master node, an SCG bearer terminated by the secondary node, a split bearer terminated by the master node, or a split bearer terminated by the secondary node.

54. A radio access network (RAN) node configured to act as a master node associated with a Master Cell Group (MCG) or a secondary node associated with a Secondary Cell Group (SCG) in dual connectivity for a User Equipment (UE), the RAN node comprising:
at least one memory; and
at least one processor coupled to the memory and configured to:
keep one or both of a configured downlink assignment associated with a Primary SCG Cell (PSCell) included in the SCG and a configured uplink grant Type 2 associated with the PSCell while the SCG configured with a radio bearer that uses radio resources of the SCG is deactivated.

55. The RAN node according to claim 54, wherein the at least one processor is further configured to keep one or both of the configured downlink assignment and the configured uplink grant Type 2 even if the UE has not maintained valid uplink timing for the SCG.

56. The RAN node according to claim 54 or 55, wherein the at least one processor is further configured to keep one or both of a configuration of configured Sounding Reference Signal (SRS) resources associated with the PSCell and a configuration of Physical Uplink Control Channel (PUCCH) resources associated with the PSCell, even if the UE has not maintained valid uplink timing for the SCG.

57. The RAN node according to any one of claims 54 to 56, wherein the at least one processor is further configured to keep one or both of a configured downlink assignment associated with one or more SCells included in the SCG and a configured uplink grant Type 2 associated with the one or more SCells while the SCG is deactivated.

58. The RAN node according to any one of claims 54 to 57, wherein the at least one processor is configured to send information to the UE indicating whether one or both of the configured downlink assignment and the configured uplink grant Type 2 need to be kept for the PSCell only or for all cells in the SCG.

59. A method performed by a User Equipment (UE) configured to support dual connectivity using a Master Cell Group (MCG) associated with a master node and a Secondary Cell Group (SCG) associated with a secondary node, the method comprising:
keeping one or both of a configured downlink assignment associated with a Primary SCG Cell (PSCell) included in the SCG and a configured uplink grant Type 2 associated with the PSCell while the SCG configured with a radio bearer that uses radio resources of the SCG is deactivated.

60. A method performed by a radio access network (RAN) node configured to act as a master node associated with a Master Cell Group (MCG) or a secondary node associated with a Secondary Cell Group (SCG) in dual connectivity for a User Equipment (UE), the method comprising:
keeping one or both of a configured downlink assignment associated with a Primary SCG Cell (PSCell) included in the SCG and a configured uplink grant Type 2 associated with the PSCell while the SCG configured with a radio bearer that uses radio resources of the SCG is deactivated.

61. A non-transitory computer readable medium storing a program that, when executed by a computer implemented in a User Equipment (UE) configured to support dual connectivity with a Master Cell Group (MCG) associated with a master node and a Secondary Cell Group (SCG) associated with a secondary node, causes the computer to perform a method, wherein
the method comprises keeping one or both of a configured downlink assignment associated with a Primary SCG Cell (PSCell) included in the SCG and a configured uplink grant Type 2 associated with the PSCell while the SCG configured with a radio bearer that uses radio resources of the SCG is deactivated.

62. A non-transitory computer readable medium storing a program that, when executed by a computer implemented in a radio access network (RAN) node configured to act as a master node associated with a Master Cell Group (MCG) or a secondary node associated with a Secondary Cell Group (SCG) in dual connectivity for a User Equipment (UE), causes the computer to perform a method, wherein
the method comprises keeping one or both of a configured downlink assignment associated with a Primary SCG Cell (PSCell) included in the SCG and a configured uplink grant Type 2 associated with the PSCell while the SCG configured with a radio bearer that uses radio resources of the SCG is deactivated.
